(19)

**Europäisches Patentamt**
**European Patent Office**
**Office européen des brevets**

(11) **EP 4 597 316 A1**

(12) **EUROPEAN PATENT APPLICATION**

(43) Date of publication:
06.08.2025 Bulletin 2025/32

(21) Application number: 25154280.9

(22) Date of filing: 27.01.2025

(51) International Patent Classification (IPC):
*G06F 9/48* (2006.01) *G06T 15/00* (2011.01)
*G06T 15/40* (2011.01)

(52) Cooperative Patent Classification (CPC):
G06F 9/48; G06F 9/485; G06T 15/005; G06T 15/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **02.02.2024 GB 202401401**

(71) Applicant: **Imagination Technologies Limited**
**Kings Langley**
**Hertfordshire WD4 8LZ (GB)**

(72) Inventor: **KING, Ian**
**Kings Langley, Hertfordshire, WD4 8LZ (GB)**

(74) Representative: **CMS Cameron McKenna Nabarro**
**Olswang LLP**
**Cannon Place**
**78 Cannon Street**
**London EC4N 6AF (GB)**

(54) **EFFICIENT SHADER OPERATION**

(57) A method of operating a GPU is described. Input attributes used in executing a first part of a geometry task are fetched by a shader core. The first part of the task executes a first part of a shader to calculate position data for each instance of the task. The first part of the task is executed to output the position data for each instance of the task. The task is then descheduled until cull results are received for each instance. In response to receiving cull results indicating at least one remaining instance in the task, input attributes used in executing a second part of a task are fetched. The second part of the task executes a second part of a shader to calculate varyings for each remaining instance. The second part of the task is executed and the varyings for each remaining instance are output.

FIG. 2

# EP 4 597 316 A1

**Description**

CROSS-REFERENCE TO RELATED APPLICATION

This application claims priority from UK patent application 2401401.1 filed on 02 February 2024, which is herein incorporated by reference in its entirety.

TECHNICAL FIELD

The invention relates to improved shaders and methods of executing shaders within a GPU.

BACKGROUND

In a graphics pipeline in a graphics processing unit (GPU), vertex shading happens before primitive culling. Culling involves discarding any primitives that do not need to be rastered, e.g. because they are outside the field of view or otherwise cannot be seen. The decision as to whether to cull a primitive depends upon the position of the primitive and as vertex shading typically involves other computations, for a primitive that is ultimately culled, performing these other computations reduces the overall efficiency and performance of the GPU as they utilise computational power and bandwidth.

The embodiments described below are provided by way of example only and are not limiting of implementations which solve any or all of the disadvantages of known vertex shaders and methods of executing vertex shaders within a GPU.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of operating a GPU is described. Input attributes used in executing a first part of a geometry task are fetched by a shader core. The first part of the task executes a first part of a shader to calculate position data for each instance of the task. The first part of the task is executed to output the position data for each instance of the task. The task is then descheduled until cull results are received for each instance. In response to receiving cull results indicating at least one remaining instance in the task, input attributes used in executing a second part of a task are fetched. The second part of the task executes a second part of a shader to calculate varyings for each remaining instance. The second part of the task is executed and the varyings for each remaining instance are output.

A first aspect provides a method of operating a graphics processing unit, GPU, the GPU comprising a shader core, vertex buffer and geometry pipeline and the method comprising, in the shader core: fetching input attributes used in executing a first part of a geometry task, wherein the first part of the task executes a first part of a shader to calculate position data for each instance of the task; executing the first part of the task; outputting the position data for each instance of the task; descheduling the task until cull results are received for each instance of the task; and in response to receiving cull results indicating at least one remaining instance in the task that has not been culled: fetching input attributes used in executing a second part of a task, wherein the second part of the task executes a second part of a shader to calculate varyings for each remaining instance of the task; executing the second part of the task; and outputting the varyings for each remaining instance of the task.

The method may further comprise, in the vertex buffer: storing the position data for the task; kicking the position data for the task into a front-end of the geometry pipeline; and in response to receiving cull results for the task from the front-end of the geometry pipeline, providing the cull results to the shader core.

The method may further comprise, in the shader core: in response to receiving cull results indicating all instances in the task have been culled, terminating the task.

The method may further comprise, in response to receiving cull results indicating at least one remaining instance in the task that has not been culled, in the vertex buffer: storing the varyings for the task; and kicking the varyings for the task into a back-end of the geometry pipeline.

The method may further comprise, allocating a region of off-chip storage to a geometry task on creation of the geometry task, receiving, at the vertex buffer, a memory allocation request for the geometry task from the shader core, wherein the memory allocation request is received after generation of the position data; and in response to receiving the memory allocation request, determining, by the vertex buffer, whether to allocate a region of the vertex buffer to the geometry task; wherein in response to allocating the region of the vertex buffer, the position data and varyings are written to the vertex buffer and in response to determining not to allocate the region of the vertex buffer, the position data and varyings are written to the allocated region of off-chip storage.

The method may further comprise, freeing the allocations in response to the task completing or being terminated.

The method may further comprise, on creation of the geometry task, sending an identifier for the geometry task to the vertex buffer and adding the identifier to a FIFO in the vertex buffer; and in response to receiving the memory allocation request at the vertex buffer and prior to determining, by the vertex buffer, whether to allocate a region of the vertex buffer to the geometry task: setting a bit in a mask corresponding to the identifier for the geometry task, wherein the memory allocation request comprises the identifier for the geometry task; determining whether the identifier for the geometry task is in a first position in the FIFO; and in response to determining that the identifier for the geometry task is in a first position in the FIFO, popping the task from the FIFO and proceeding to determine whether to allocate a region of the vertex buffer to the geometry task.

The method may further comprise, allocating a region of off-chip storage to a geometry task on creation of the geometry task, receiving, at the vertex buffer, a first memory allocation request for the geometry task from the shader core, wherein the first memory allocation request is received after generation of the position data; and in response to receiving the first memory allocation request, determining, by the vertex buffer, whether to allocate a first region of the vertex buffer to the geometry task; wherein in response to allocating the first region of the vertex buffer, the position data is written to the first region of the vertex buffer and in response to determining not to allocate the first region of the vertex buffer, the position data is written to the allocated region of off-chip storage.

The method may further comprise, after receiving cull results indicating at least one remaining instance in the task that has not been culled: receiving, at the vertex buffer, a second memory allocation request for the geometry task from the shader core, wherein the second memory allocation request is received after generation of the varyings; and in response to receiving the second memory allocation request, determining, by the vertex buffer, whether to allocate a second region of the vertex buffer to the geometry task; wherein in response to allocating the second region of the vertex buffer, the varyings are written to the second region of the vertex buffer and in response to determining not to allocate the second region of the vertex buffer, the varyings are written to the allocated region of off-chip storage.

The method may further comprise, in response to receiving a notification that the first part of the geometry task is complete, freeing the first allocation; and in response to the task completing, freeing the off-chip allocation and the second allocation.

The method may further comprise, in response to receiving cull results indicating at least one remaining instance in the task that has not been culled, freeing the first allocation; and in response to the task completing, freeing the off-chip allocation and the second allocation.

The method may further comprise, in response to receiving cull results indicating all instances in the task have been culled, freeing the allocations.

The method may further comprise, on creation of the geometry task, sending an identifier for the geometry task to the vertex buffer and adding the identifier to both a first FIFO and a second FIFO in the vertex buffer; in response to receiving the first memory allocation request at the vertex buffer and prior to determining, by the vertex buffer, whether to allocate a first region of the vertex buffer to the geometry task: setting a bit in a first mask corresponding to the identifier for the geometry task, wherein the first memory allocation request comprises the identifier for the geometry task; determining whether the identifier for the geometry task is in a first position in the first FIFO; and in response to determining that the identifier for the geometry task is in a first position in the first FIFO, popping the task from the first FIFO and proceeding to determine whether to allocate a first region of the vertex buffer to the geometry task; and, in response to receiving the second memory allocation request at the vertex buffer and prior to determining, by the vertex buffer, whether to allocate a second region of the vertex buffer to the geometry task: setting a bit in a second mask corresponding to the identifier for the geometry task, wherein the second memory allocation request comprises the identifier for the geometry task; determining whether the identifier for the geometry task is in a first position in the second FIFO; and in response to determining that the identifier for the geometry task is in a first position in the second FIFO, determining whether the bit in the second mask corresponding to the identifier for the geometry task is flagged to indicate termination; in response to determining that the bit in the second mask is flagged to indicate termination, popping the task from the second FIFO without determining whether to allocate a second region of the vertex buffer to the geometry task; and in response to determining that the bit in the second mask is not flagged to indicate termination, popping the task from the second FIFO and proceeding to determine whether to allocate a second region of the vertex buffer to the geometry task.

A second aspect provides a graphics processing unit, GPU, comprising: a shader core; a vertex buffer; and a geometry pipeline, wherein the shader core is arranged to: fetch input attributes used in executing a first part of a geometry task, wherein the first part of the task executes a first part of a shader to calculate position data for each instance of the task; execute the first part of the task; output the position data for each instance of the task; deschedule the task until cull results are received for each instance of the task; and in response to receiving cull results indicating at least one remaining instance in the task that has not been culled: fetch input attributes used in executing a second part of a task, wherein the second part of the task executes a second part of a shader to calculate varyings for each remaining instance of the task; execute the second part of the task; and output the varyings for each remaining instance of the task.

The vertex buffer in the GPU may be arranged to: store the position data for the task; kick the position data for the task into a front-end of the geometry pipeline; and in response to receiving cull results for the task from the front-end of the geometry pipeline, provide the cull results to the shader core.

The shader core in the GPU may be further arranged to: in response to receiving cull results indicating all instances in the task have been culled, terminate the task.

The vertex buffer in the GPU may be further arranged, in response to receiving cull results indicating at least one remaining instance in the task that has not been culled: store the varyings for the task; and kick the varyings for the task into a back-end of the geometry pipeline.

The GPU may further comprise a resource scheduler arranged to allocate a region of off-chip storage to a geometry task on creation of the geometry task, and wherein the vertex buffer is further arranged to: receive a first memory allocation request for the geometry task from the shader core, wherein the first memory allocation request is received after generation of the position data; and in response to receiving the first memory allocation request, determine whether to allocate a first region of the vertex buffer to the geometry task; wherein in response to allocating the first region of the vertex buffer, the position data is written to the first region of the vertex buffer and in response to determining not to allocate the first region of the vertex buffer, the position data is written to the allocated region of off-chip storage.

The vertex buffer in the GPU may be further arranged, after receiving cull results indicating at least one remaining instance in the task that has not been culled, to: receive a second memory allocation request for the geometry task from the shader core, wherein the second memory allocation request is received after generation of the varyings; and in response to receiving the second memory allocation request, determine whether to allocate a second region of the vertex buffer to the geometry task; wherein in response to allocating the second region of the vertex buffer, the varyings are written to the second region of the vertex buffer and in response to determining not to allocate the second region of the vertex buffer, the varyings are written to the allocated region of off-chip storage.

The vertex buffer in the GPU may be further arranged, in response to receiving a notification that the first part of the geometry task is complete, to free the first allocation; and in response to the task completing, to free the off-chip allocation and the second allocation.

The GPU may be embodied in hardware on an integrated circuit. There may be provided a method of manufacturing, at an integrated circuit manufacturing system, a GPU. There may be provided an integrated circuit definition dataset that, when processed in an integrated circuit manufacturing system, configures the system to manufacture a GPU. There may be provided a non-transitory computer readable storage medium having stored thereon a computer readable description of a GPU that, when processed in an integrated circuit manufacturing system, causes the integrated circuit manufacturing system to manufacture an integrated circuit embodying a GPU.

There may be provided an integrated circuit manufacturing system comprising: a non-transitory computer readable storage medium having stored thereon a computer readable description of the GPU; a layout processing system configured to process the computer readable description so as to generate a circuit layout description of an integrated circuit embodying the GPU; and an integrated circuit generation system configured to manufacture the GPU according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figures 1A and 1B show schematic diagrams of the structure of example shaders;

Figure 2 is a flow diagram of a first example of an improved method of operating a GPU;

Figure 3A shows a schematic diagram of a first example GPU in which the methods described herein may be implemented;

Figure 3B shows a schematic diagram of a second example GPU in which the methods described herein may be implemented;

Figures 4A, 4B and 4C show schematic diagrams of third and fourth example GPUs in which the methods described herein may be implemented;

Figure 5 shows a schematic diagram of the structure of another example shader;

Figure 6 is a flow diagram showing a first example of a method of just-in-time vertex buffer allocation;

Figure 7 is a schematic diagram of a fifth example GPU in which the methods described herein may be implemented;

Figure 8 is a flow diagram showing a second example of the method of just-in-time vertex buffer allocation;

Figures 9A, 9B and 10 are a flow diagram showing two variations of a first example of the method of just-in-time vertex buffer allocation where there are two buffer allocations per task, assuming that the task is not terminated early as a result of all the instances in the task;

Figures 11A, 11B and 12 are a flow diagram showing two variations of a second example of the method of just-in-time vertex buffer allocation where there are two buffer allocations per task, assuming that the task is not terminated early as a result of all the instances in the task;

Figure 13 is a schematic diagram showing data stored in the spill buffer;

Figure 14 is a schematic diagram showing a method of controlling the ordering of processing the memory allocation requests which may be implemented as a variation of the method shown in figures 11A, 11B and 12;

Figures 15A and 15B show an example scenario that demonstrates the method of figure 14;

Figures 16A and 16B show two example execution timelines when using the methods described herein;

Figure 17 is a flow diagram showing an example method of address calculation for use in the methods described herein;

Figure 18 is a flow diagram showing an example method of handling reads from a geometry pipeline;

Figure 19 is a schematic diagram of a third example GPU in which the methods described herein may be implemented;

Figure 20 is flow diagram showing an example method of writing data back from the off-chip storage into the on-chip storage once the geometry pipeline exits from the OOM state;

Figure 21 is a schematic diagram of a fourth example GPU in which the methods described herein may be implemented;

Figure 22 shows a computer system in which a graphics processing system is implemented; and

Figure 23 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, within a graphics pipeline in a GPU, vertex shading happens before primitive culling and the culling decision is based entirely on the position (i.e. the position of each vertex of the primitive). Where a primitive is ultimately culled, the computational power and bandwidth that was used to execute the vertex shader to calculate any other varying (e.g. user-defined varyings, or attributes, for use by a fragment shader) is wasted. As a significant amount of the bandwidth consumed by a GPU per frame is the reading of input attributes, any bandwidth used to read input attributes for a primitive that is later culled and that are not used to determine position, is wasted and reduces the overall efficiency of the GPU.

The term 'varying' is used herein to refer to an attribute of a primitive vertex that varies across the primitive, e.g. texture coordinate or colour.

Existing solutions to address this inefficiency involve splitting a vertex shader into two parts - a position shader and a varying shader. The position shader only emits position (i.e. the position of each vertex), which is then used to determine whether a primitive is culled, and the varying shader is only executed for vertices of primitives that survive the culling operation. However, this requires every vertex shader to be rewritten in order to divide it into a position shader and a varying shader. Splitting the vertex shader into two shaders can also introduce inefficiencies, for example, where both the position shader and varying shader rely upon the same input attribute, which therefore ends up being read in twice and hence increases bandwidth use for a vertex that is not culled.

Described herein is an improved method of operating a GPU which improves the overall efficiency by reducing the redundant processing and memory accesses resulting from culled primitives but does not require a shader, such as a vertex shader, to be divided into two separate shaders. As the shader is not split in two, it reduces the amount of hardware logic required (e.g. an extra master unit to handle the additional shader is not required), reduces scheduling costs (as there is no second shader to schedule) and inefficiencies are not introduced either where a primitive is not culled or where the varyings depend upon position or upon the same input attributes that are used to calculate position (which would require duplication of instructions between the two new shaders). The methods described herein are also more broadly applicable to other types of shaders, such as domain shaders. The method may also be applied to mesh shaders and/or geometry shaders.

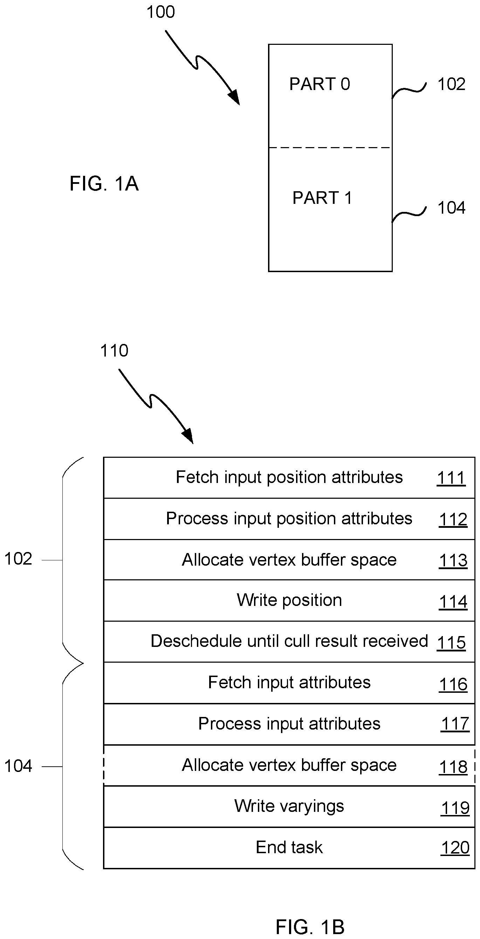

In the methods described herein, the instructions in the shader (e.g. the vertex shader) are arranged (e.g. ordered) so that when executed it emits the position first, then waits for the cull result before continuing with the varying generation. This ordering may be implemented by a compiler when the shader is compiled. Only those input attributes required to determine position are fetched initially and the remaining input attributes (including user attributes) are fetched after receipt of the cull result and then are only fetched for those vertices which remain after the culling (i.e. only for vertices of primitives which were not culled). Figure 1A shows a schematic diagram of the structure of an example shader 100 which comprises a first part 102, part 0, and a second part 104, part 1. The instructions in the first part 102 (part 0) calculate and emit the position and the subsequent instructions in the second part 104 (part 1) emit the varyings.

Figure 1B shows a schematic diagram of the structure of an example shader 110 in more detail. The first part 102 of the shader 110 comprises instructions that fetch the input position attributes 111 (i.e. those input attributes required to calculate position), process those fetched input position attributes 112 and write the position to a vertex buffer 114. Before the position is written, space is allocated in the vertex buffer and as shown in figure 1B, the shader includes an instruction to request an allocation 113. As described in more detail below, the space that is requested (and then allocated) may correspond to only the part 0 data (i.e. the position) or to both the part 0 data and the part 1 data (i.e. the varyings). Where the initial allocation request instruction 113 requests vertex buffer space for both part 0 and part 1, the second allocation instruction 118 is omitted.

At the end of the first part 102, there is an instruction which deschedules the task until the cull result is received 115. The term 'task' is used herein to refer to a collection of instances of the same type which execute the same shader code. A geometry task executes a shader such as a vertex shader, domain shader, geometry shader or mesh shader for a plurality of vertices, and each instance of the task corresponds to a different vertex. Consequently, when a task is executed, the first part 102 of the shader is executed for all instances of the task and the task is descheduled until the cull result is received for all instances of the task, e.g. in the form a cull mask.

The second part 104 of the shader 110 comprises instructions that fetch the remaining input attributes 116 (e.g. user attributes and any other input attributes that are required to calculate the varyings and which were not previously fetched by the first part 102 of the shader 110), process the input attributes 117 and write the varyings to the vertex buffer 119. The task then ends 120. As described above, if space for the varyings in the vertex buffer was not previously requested (in the first part), then the second part 104 of the shader 110 includes an instruction to request a second allocation 118 before the varyings are written.

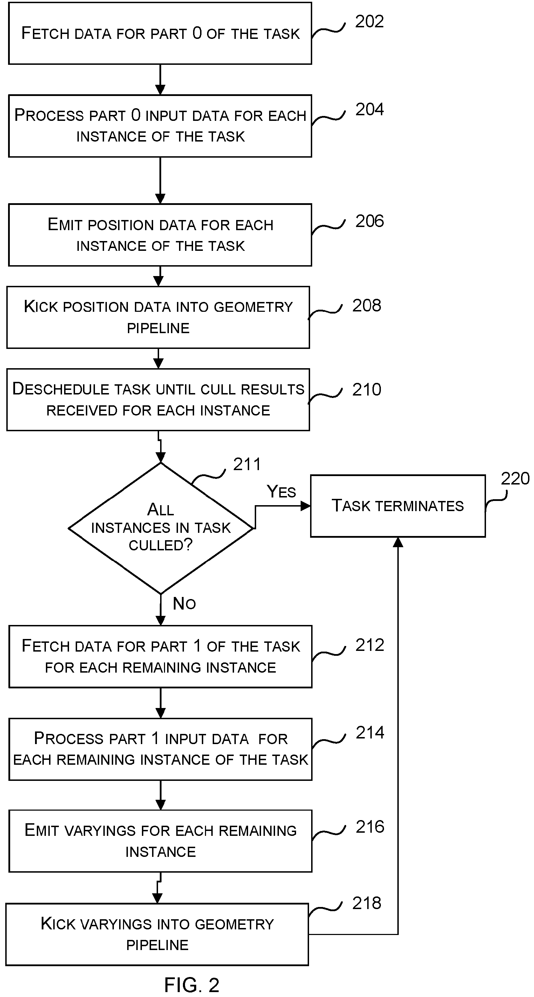

Figure 2 is a flow diagram of a first example of the improved method of operating a GPU. The method comprises fetching the data (e.g. input attributes) that is required to execute part 0 of the shader for all of the instances in the task (block 202). This fetched data (for part 0 of the shader) is then processed (by a shader core within the GPU) for all of the instances in the task (block 204, which involves scheduling and executing the first part of the task for all of the instances) and the shader emits position data for each instance (block 206). The position data for each instance of the task is then kicked into the geometry pipeline within the GPU (block 208) and the task is descheduled (block 210). The descheduled task is no longer active (i.e. it is idle) but resources remain allocated to the task. The length of time that the task remains descheduled for may, for example, be of the order of 150-200 cycles for a task that comprises 40-50 primitives.

The task is subsequently woken, such that it returns to an active state, in response to receiving cull results (from the cull unit within the geometry pipeline). The cull response may be received in the form of a cull mask. If not all the instances in the task have been culled ('No' in block 211), the method fetches data for part 1 of the shader for any instances of the task that have not been culled (block 212). This data that is fetched comprises the remaining input attributes, including user attributes for the remaining instances (i.e. those that are not culled). This data is not fetched for those instances of the task where the cull results indicate that the instance has been culled. This reduces the overall amount of data that is fetched when executing geometry tasks and reduces the overall memory bandwidth that is used.

Having fetched the data for part 1 of the shader, this fetched data (for part 1 of the shader) is processed for those remaining instances of the task (block 214, which involves scheduling and executing the second part of the task for the remaining instances), i.e. for the instances that survived the cull operation. Any instances which were culled are disabled by the shader core. The execution of part 1 of the shader for those remaining instances (in block 214) generates the varyings which are then output (block 216) and kicked into the geometry pipeline (block 218). Part 1 of the shader is not executed for those instances of the task where the cull results indicate that the instance has been culled. This reduces the overall amount of processing power that is used. The task subsequently terminates (block 220).

If all instances of the task are culled ('Yes' in block 211), then the task terminates (block 220). In this situation none of the data for execution of part 1 is fetched and part 1 of the shader is not executed. This avoids fetching and processing data for instances that are later culled.

Figure 2 does not show when space in the vertex buffer is requested to store the position data and varyings (as emitted in blocks 206 and 216). As described above with reference to figure 1B, a single allocation may be requested (by instruction 113) for both the position data and the varyings (i.e. for the entirety of the shader), or two separate allocations may be requested (by instructions 113 and 118), the first for the position data and the second for the varyings. Alternatively, the vertex buffer allocation may be requested earlier (e.g. when the task is created); however, this can result in bottlenecks due to there being insufficient space in the vertex buffer to allocate any more space for new tasks.

The allocation of vertex buffer space to store data after the data that is to be stored has been generated (as shown in the shader of figure 1B) may be referred to as 'just-in-time vertex buffer allocation'. An example method of just-in-time vertex buffer allocation is described in detail below.

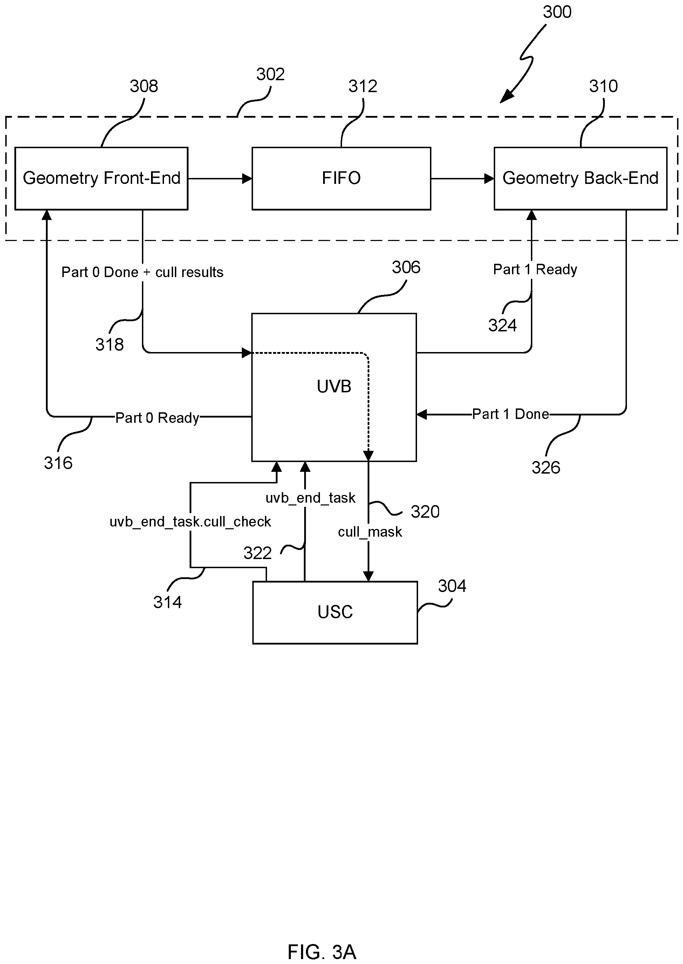

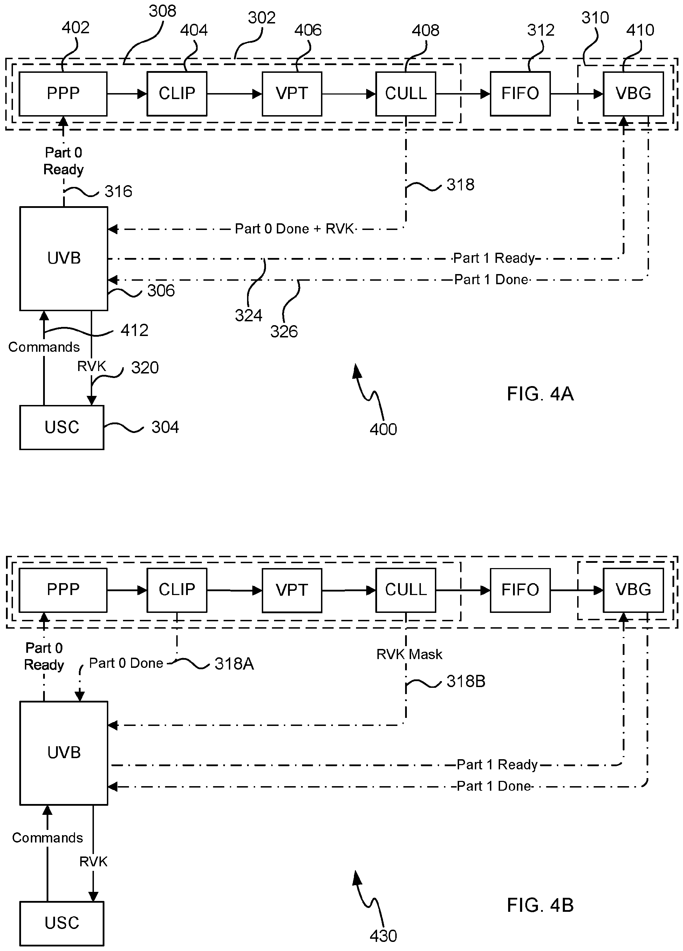

Figure 3A shows a schematic diagram of a first example GPU 300 in which the methods described herein may be implemented. The GPU 300 comprises a geometry pipeline 302, shader core 304 and vertex buffer 306. The shader core 304 is a processor that comprises a plurality of execution pipelines and can simultaneously process pixel shader, vertex shader and compute shader tasks. The vertex buffer 306 is on-chip storage for the geometry data generated by the shader core 304. The geometry pipeline 302 performs tasks such as clipping, viewport scaling and culling and also performs tessellation and tiling. The geometry pipeline 302 is split into a geometry front-end 308 and a geometry back-end 310, with a FIFO 312 positioned between the geometry front-end 308 and the geometry back-end 310. The geometry front-end 308 comprises elements of the geometry pipeline 302 up to and including the cull unit. The geometry back-end 310 comprises elements of the geometry pipeline 302 that are after the cull unit. This is described in more detail below with reference to figures 4A and 4B. The FIFO 312 stores position data for the primitives that survived the culling operation and may store additional information, for example sideband data for primitives that have not been culled (e.g. an identifier for the task, an indication of whether the primitive was clipped, an indication of whether the primitive is the last primitive from the task and/or various per-primitive properties, such as one or more of viewport ID, layer ID, edge flags, back-facing flag, etc.). It will be appreciated that the GPU 300 will comprise additional elements not shown in figure 3A.

Referring back to the method shown in figure 2, the shader core 304 executes the shader (e.g. shader 110 as shown in figure 1B) and consequently executes the blocks 202-206, 210-216 and 220 of figure 2. The position data and varyings that are emitted by the shader core (in blocks 206 and 216) are written to the vertex buffer 306. The shader core 304 triggers the vertex buffer 306 to kick the position data into the geometry front-end 308 of the geometry pipeline 302 (block 208 and arrow 316) by sending an instruction (uvb_end_task.cull_check) to the vertex buffer 306 (arrow 314). By using a single instruction (rather than two separate instructions, one for kicking the position data and the other for performing the cull check), it ensures that the geometry front-end 308 cannot return the cull results before the shader core is ready to receive them. An alternative solution (where two separate instructions are used) would be to include additional storage (which increases the size of the GPU) to store the cull results in the event that they are received before the shader core is ready to receive them.

The geometry front-end 308 determines which vertices are culled (i.e. as a consequence of determining which primitives are culled) and returns the cull results for each instance in the task (arrow 318), where each instance corresponds to a vertex, and this may be in the form of a cull mask. The cull mask may comprise a bit corresponding to each instance in the task with the value of the bit (i.e. zero or one) indicating whether the instance has been culled or not (e.g. zero for culled instances and one for instances that have not been culled). The vertex buffer 306 provides the cull results for each instance in the task to the shader 304 (arrow 320). As described above, the cull mask may be generated by the geometry front-end 308. Alternatively, the cull results may be provided by the geometry front-end 308 in a different format and the cull mask may be generated by the vertex buffer 306 from the cull results provided by the geometry front-end 308.

The cull mask may contain a fixed number of bits that, for example, corresponds to the maximum number of instances in a task, e.g. 128 bits. Where the number of instances in a task varies, this means that the cull mask alone may not be sufficient to determine whether all the instances in a task have been culled (e.g. where those bits in the mask that do not correspond to a valid instance in the task have the same value as bits that correspond to vertices that have not been culled). The shader core 204 will know the number of instances in each task and so the shader core 304 can always determine from the cull mask whether all the instances in the task have been culled. Similarly, the geometry front-end 308 will know the number of instances in each task and so will know whether all the instances in the task have been culled. In order that the vertex buffer 306 knows when all the instances in a task have been culled, a terminate bit may be sent as sideband data to the cull response (arrow 318). This avoids the need for the vertex buffer 306 to be told, and store, the number of instances in each task.

Having processed the second part of the shader for the remaining instances and generated the varyings, the shader core 304 triggers the vertex buffer 306 to kick the varyings into the geometry back-end 310 of the geometry pipeline 302 (block 218 and arrow 324) by sending an instruction (uvb_end_task) to the vertex buffer 306 (arrow 322). The geometry back-end 310 processes the remaining primitives (i.e. those primitives with vertices that were not culled in the geometry front-end 308) and saves the resulting primitive data (e.g. in the form of primitive blocks) into a parameter buffer (not shown in figure 3A). The geometry back-end 310 may generate other data (e.g. other data structures) which are written to the parameter buffer (e.g. tile control structures). This processing of the remaining primitives performed by the geometry back-end 310 uses the information stored in the FIFO 312 as well as the varyings stored in the vertex buffer 306. Once the processing of the remaining primitives in the task is complete, the geometry back-end notifies the vertex buffer (arrow 326) and this triggers the freeing of the vertex buffer allocation for the task. Where there are two separate allocations, one for the first part of the shader and one for the second part of the shader, the freeing of the first allocation (corresponding to part 0) may be triggered by the returning of the cull results (arrow 318) and the freeing of the second allocation may be triggered by the notification that the primitives have been processed (arrow 326).

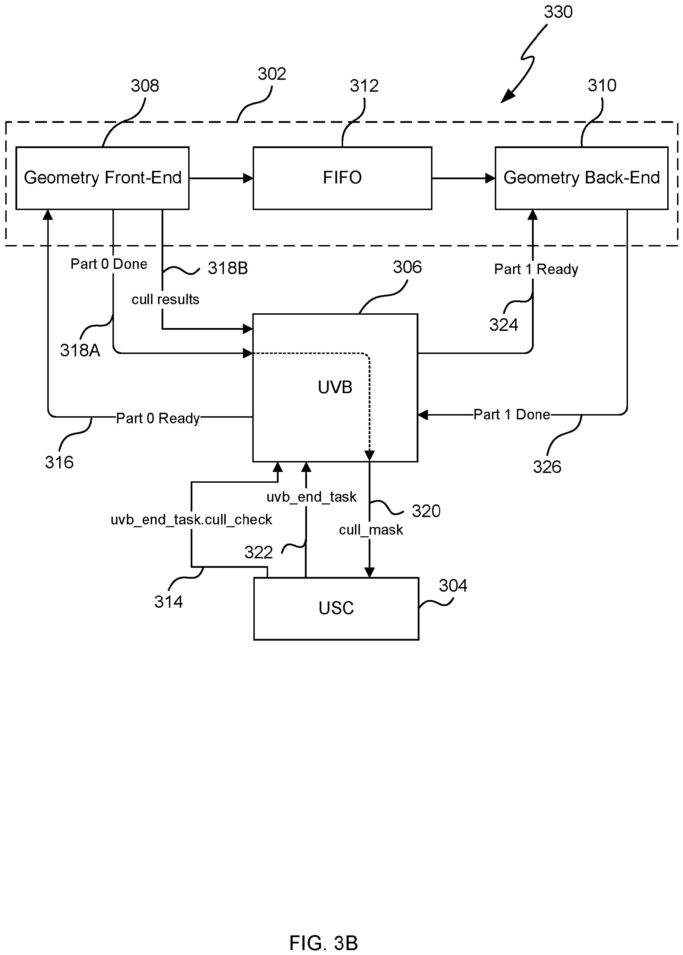

Figure 3B shows a schematic diagram of a second example GPU 330 in which the methods described herein may be implemented. This GPU 330 is a variation of that shown in figure 3A and described above. In the GPU 330, instead of the freeing of the first allocation being triggered by the returning of the cull results, the freeing of the first allocation (corresponding to part 0) is triggered by a separate notification from the geometry front-end 308 (arrow 318A) and which is sent before the cull results (arrow 318B). Use of this additional notification (arrow 318A) enables the allocation to be freed earlier and reduces latency.

Figure 4A shows a more detailed schematic diagram of a third example GPU 400 in which the methods described herein may be implemented. In the example GPU 400 shown in figure 4A, the geometry front-end 308 comprises a primitive processing pipeline (PPP) 402, a clip unit 404, a viewport transform (VPT) unit 406 and a cull unit 408. The PPP 402 assembles primitives and the clip unit 404 divides any primitives that lie on the boundary of the viewing region and divides them into several primitives along the boundary. The viewport transform unit 406 transforms the primitives into the viewport coordinate system and the cull unit 408 culls those primitives which are outside the field of view or otherwise cannot be seen. The geometry back-end 310 comprises the vertex block generator (VBG) 410 that processes the remaining primitives and copies the resulting primitive data into a buffer (not shown in figure 4A). As shown in figure 4A, it is the cull unit 408 that communicates the cull results to the vertex buffer 306 (arrow 318). The vertex buffer 306 kicks the varyings data into the VBG 410 (arrow 324) and the VBG 410 notifies the vertex buffer 306 that the primitives have been processed (arrow 326). In figure 4A, the commands sent from the shader core 304 to the vertex buffer 306 (as indicated by arrows 314 and 322 in figure 3A) are shown collectively as a single arrow 412.

Figure 4B shows a more detailed schematic diagram of a fourth example GPU 430 in which the methods described herein may be implemented. Whilst the example GPU 400 shown in figure 4A corresponds to that shown in figure 3A and described above, the example GPU 430 shown in figure 4B is a variation on that shown in figure 4A and corresponds to that shown in figure 3B. In particular, in the GPU 430 shown in figure 4B, the freeing of the first allocation (corresponding to part 0) is triggered by a separate notification from the geometry front-end 308 (arrow 318A) and which is sent before the cull results (arrow 318B). As shown in figure 4B, the 'part 0 done' notification 318A s generated by the last module in the geometry front-end that needs to directly access any part 0 data. In this example, this is the CLIP module 404. Neither the VPT unit 406 or CULL unit 408 needs to directly access the part 0 data as the CLIP module 404 outputs a stream of primitives (which contain, amongst other things, the position of each vertex). The VPT unit 406 and CULL unit 408 use the primitive data output by the CLIP module 404 (and sideband data) rather than reading any data from the vertex buffer 306.

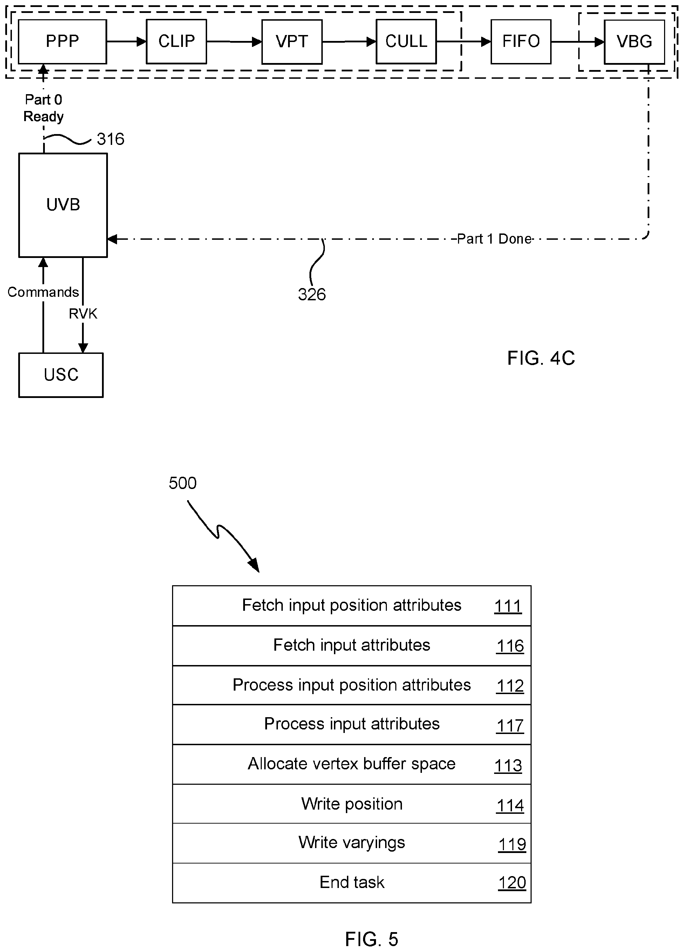

Depending upon the way that a shader is compiled, it may be compiled to comprise a first part and a second part (e.g. as shown in figures 1A and 1B) or may be compiled as single part, such that the improved methods described herein are disabled. Where the shader is compiled so that the improved functionality described herein is disabled, the instructions are ordered differently and this is shown in figure 5. Figure 5 shows an example shader 500 that corresponds to that shown in figure 1B and described above, except that the improved functionality described herein is disabled. It can be seen from figure 5 that this means that there is no division of the shader into two parts and the instructions for fetching the attributes 111, 116 are positioned before the instructions for processing the attributes 112, 117. If not already allocated at the start, the vertex buffer space is allocated by an instruction 113 before the write instructions 114, 119.

Figure 4C shows the same example GPU as figure 4A or figure 4B but in this example, the shader has been compiled as shown so that the improved functionality described herein is disabled and so the instructions are arranged as shown in figure 5. As can be seen by comparing figures 4A and 4B to figure 4C, the cull unit 408 does not communicate the cull result to the vertex buffer 306 (i.e. arrows 318, 318A and 318B are omitted in figure 4C) and the vertex buffer 306 does not separately kick the varyings into the VBG 410 (i.e. arrow 324 is omitted in figure 4C).

A vertex buffer 306 may be configured such that it can operate the methods described herein if a shader has the instructions arranged in two parts (e.g. as shown in figures 1A and 1B) and can also operate with these methods disabled if a shader is instead compiled differently (e.g. as shown in figure 5). This means that the methods described herein can be implemented on a per-shader or per-task basis dependent upon the way that the shader executed by the task was compiled.

According to improved methods of operating a GPU described herein, if all the instances in a task are culled in the geometry front-end 308 (i.e. in the cull unit 408), the varyings will never be kicked into the geometry back-end 310 (arrow 324 will not occur). As described above, the vertex buffer 306 knows when this situation arises, either via a terminate bit sent as sideband data to the cull data (arrow 318) or because the vertex buffer 306 knows the number of instances in each task and knows how many instances in a task have been culled. Consequently, the vertex buffer 306 knows not to expect either an instruction from the shader core 304 to kick the varyings data (arrow 322 will not occur) or a response from the geometry back-end 310 (arrow 324 will not occur). In this situation, in order that the geometry back-end 310 can track that a task has been terminated before it has processed any primitives from the task, the geometry front-end 308 (e.g. the cull unit 408) may send a message to the geometry back-end 310 to indicate the end of a task.

This end of task information may be propagated to the geometry back-end 310 (e.g. to the VBG 410) by saving dummy primitive data in the FIFO 312 which is flagged as relating to a last primitive in the task and marking the primitive (in the dummy primitive data) as invalid or inactive. This notification to the geometry back-end 310 (e.g. to the VBG 410) that a task has been terminated may be particularly useful where geometry data (GD) spill IDs are allocated to tasks and reused for different tasks (as described below), in order that the VBG 410 can invalidate its primitive data content addressable memory (CAM) to prevent future hits on the data. The data that is stored in the primitive data CAM that may be invalidated by the VBG 410 may comprise vertex indices that correspond to the original task and which are tagged by the ID for the task or the GD spill ID. For example, three vertex indices 0, 1, 2 may be written as part of a first task and three vertex indices 0,1, 2 may be written as part of a second task. If the data is not invalidated between tasks, vertex index 0 from the first task may be confused with vertex index 0 from the second task, where actually these vertex indices point to different data. The vertex index identifies the location of the vertex data in the vertex buffer 306 (e.g. as written by the shader core 304) and is not the same as the vertex ID. GD spill IDs are described in detail below.

Where not all the primitives in a task are culled, the geometry front-end 308 (e.g. the cull unit 408) may send a message to the geometry back-end 310 to indicate that the processing of the first part of the shader is complete. This may be achieved by flagging the data saved in the FIFO for the last surviving primitive in the task as the last primitive in the task. In this case, the primitive is not marked as invalid or inactive because it relates to a primitive that survived the cull.

As described above, the improved methods of operating a GPU described herein may utilise just-in-time vertex buffer allocation and may involve a single vertex buffer allocation that is requested after the position data has been generated but before the varyings have been generated (i.e. after executing part 0 of the shader) or may involve two vertex buffer allocations where the first is requested after the position data has been generated (i.e. after executing part 0 of the shader) and the second is requested after the varying have been generated (i.e. after executing part 1 of the shader). Use of two vertex buffer allocations, the first for the position data (i.e. for part 0 of the shader) and the second for the varyings (i.e. for part 1 of the shader) provides a more efficient use of the vertex buffer 306 since the first allocation can be freed by the last module in the geometry front-end that needs to directly access any part 0 data (e.g. the CLIP module 404, as triggered by arrow 318A) or once the cull results for the task have been returned (e.g. triggered by arrow 318) and the second vertex buffer allocation is never requested for any task where all the instances are culled and so the task is terminated early (in block 220). Where a second vertex buffer allocation is requested, this may be sized according to the original number of instances in the task or according to the number of instances that survive the culling operation or otherwise dependent upon the instances that survive culling operation, thereby resulting in a smaller vertex buffer allocation on average across tasks. The second vertex buffer allocation is freed once all the remaining primitives have been processed by the geometry back-end 310 (e.g. triggered by arrow 326).

Where the second vertex buffer allocation is sized according to the instances that survive the culling operation, this may be implemented by determining a highest surviving vertex index in the cull mask and using that to determine the size if the part 1 allocation required to hold all the surviving vertices. This has the effect that the size of the second vertex buffer allocation is not directly proportional to the number of surviving vertices but is reduced as a consequence of culling vertices. For example, given a pre-defined number of vertices in a task (e.g. 128 vertices), if it is determined that all vertices with indices above a particular number, $index_{max}$, were culled (e.g. indices 63 through 127 were culled), the second vertex buffer allocation may be allocated to provide space for vertices 0 through $index_{max}$, (e.g. where $index_{max} = 62$) for part 1, because we know that no surviving primitives will attempt to reference any data for indices higher than $index_{max}$, (e.g. for index 63 or above). In such an example, if one or more vertices with indices below $index_{max}$ were also culled, the size of the second vertex buffer allocation is not reduced further in order to preserve correspondence between part 0 and part 1 indices.

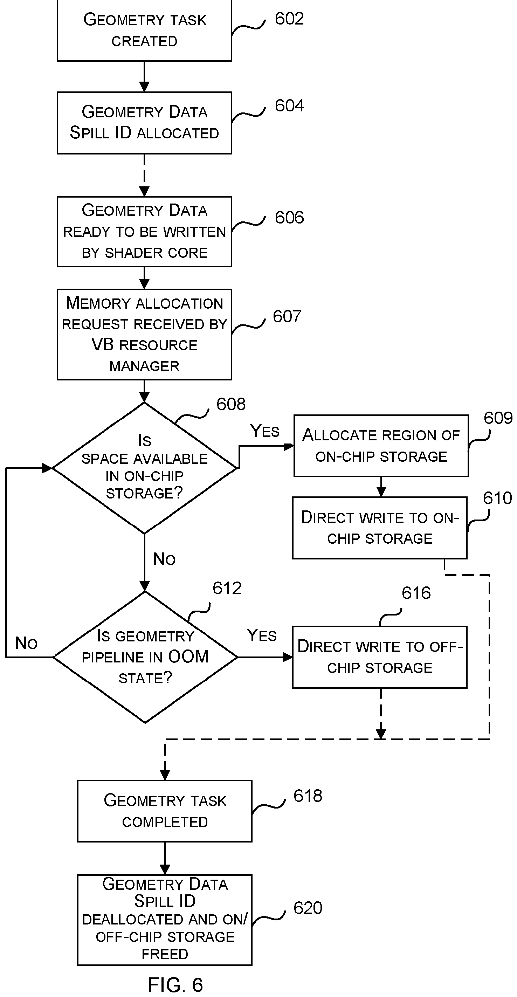

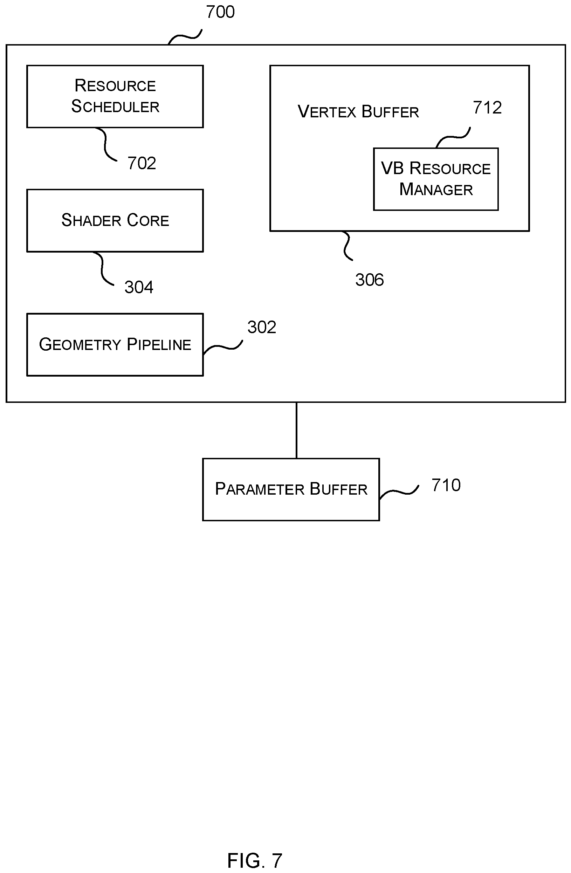

Methods of just-in-time vertex buffer allocation, where a single vertex buffer allocation is made for both position data (i.e. part 0 data) and varyings (i.e. part 1 data) can be described with reference to figures 6-8. Figure 6 is a flow diagram showing a first example of just-in-time vertex buffer allocation. This method can be described with reference to figure 7 which shows an example GPU 700 in which the method of figure 6 (or any of the subsequently described methods of just-in-time vertex buffer allocation) may be implemented. The GPU 700 comprises a resource scheduler 702, shader core 304, geometry pipeline 302 and a vertex buffer 306. As shown in figure 7, the vertex buffer 306 comprises a resource manager 712, referred to as the vertex buffer (VB) resource manager. Figure 7 also shows a parameter buffer 710 that is external to the GPU 700 and may comprise a plurality of data structures which collectively operate as the parameter buffer 710. The parameter buffer 710 is off-chip storage for the data that is generated by the geometry pipeline 302 (e.g. for storing primitive blocks and tile control structures generated by the geometry pipeline). It will be appreciated that a GPU may comprise additional elements in addition to those shown in figure 7 and a processing unit may comprise multiple GPUs 700 as shown in figure 7.

As shown in figure 6, when a geometry task is created by the resource scheduler 702 (block 602), an identifier referred to as a geometry data (GD) spill ID is allocated to the task (block 604). This GD spill ID corresponds to a region in the off-chip memory (which is separate from the parameter buffer 710 described above) and so by allocating the GD spill ID to the task (in block 604), the corresponding region in the off-chip memory is allocated to the task. The allocated region of off-chip memory (that corresponds to the allocated GD spill ID) is subsequently freed by the VB resource manager 712 when the geometry task completes (block 620). The GD spill ID may be allocated to the task from a finite set of GD spill IDs and if there are no unallocated GD spill IDs (i.e. all GD spill IDs are currently allocated), then a new task cannot be created. Use of a finite set of GD spill IDs provides an upper limit on the number of geometry tasks that can be executing in the GPU at any time; however, this upper limit may be bigger than the limit that would be imposed without the use of this just-in-time vertex buffer allocation and is not linked to the size of the on-chip storage for the geometry data (e.g. the vertex buffer 306). In an example there may be 64-128 GD spill IDs. The number of GD spill IDs may be the same as the number of task IDs in the finite pool of task IDs (from which task IDs are allocated on task creation).

The size of the region of off-chip memory that corresponds to a GD spill ID may be fixed or may be a variable that is controlled by a graphics driver. By enabling a graphics driver to change the size of the regions that are allocated for each GD spill ID, the graphics driver can set the size to match common / typical resource requirements across a range of applications / workloads (e.g. select the size based on an average case). The graphics driver may additionally adjust how much off-chip memory is allocated dynamically, for example in response to changing conditions within the GPU. If the size of the region that corresponds to a GD spill ID is increased, this increases the overall memory requirements to store the geometry data but it may enable more tasks to be scheduled in parallel (e.g. because a task with large memory requirements may need to be allocated fewer GD spill IDs, see discussion below regarding allocation of more than one GD spill ID to a task). In addition to, or instead of, adjusting the size of the region that corresponds to a GD spill ID, the driver may also apportion the GD spill IDs between different hardware units which feed data into the GPU (and which may be referred to as 'master units'). By allocating a number of GD spill IDs to one or more (or each) of the hardware units, the method can ensure that a particular hardware unit is guaranteed access to GD spill IDs and this avoids deadlocks where future work from one hardware unit blocks earlier work by another hardware unit by consuming all the GD spill IDs.

Subsequently, when position data for the instances of the task is ready to be written by the shader core 304 (block 606, e.g. following block 204 of figure 2), the shader core 304 sends a memory allocation request to the vertex buffer 306. The memory allocation request is sent before the data is written out to the vertex buffer 306 (i.e. before block 206 of figure 2). The memory allocation request is received by the VB resource manager 712 in the vertex buffer 306 (block 707) and this triggers the resource manager 712 in the vertex buffer 306 to determine (in blocks 608 and 612) whether the geometry data is to be written to the vertex buffer 306 (block 610) or to the allocated off-chip storage (block 616). The result of this determination of write location (i.e. whether the write will be directed to the on-chip or off-chip storage) may be stored (e.g. in a data structure indexed by an identifier for the task and/or the GD spill ID). The GD spill ID may not be included within the request that is received by the VB resource manager 712 (in block 607), but it may be provided as sideband data between the resource scheduler 702 and the shader core 304. The resource scheduler 702 may send information about the task to the VB resource manager 712 (e.g. GD spill ID and other parameters). The VB resource manager 712 may then hold this information until the shader core 304 sends the allocation request (which may have the task ID or GD spill ID as sideband data) and the VB resource manager 712 can then use the sideband data to perform a lookup in the previously received information.

As a consequence of the results of the determination (in blocks 608 and 612) the VB resource manager 712 then directs the subsequently received write requests from the shader core 304 for the geometry task to either the vertex buffer 306 (in block 610) or the off-chip storage which is allocated to the geometry task (block 616). Where the geometry data is to be written to the vertex buffer 306 (in block 610), a region of the vertex buffer 306 is allocated by the VB resource manager 712 to the geometry task (block 609) in response to determining that space is available in the vertex buffer ('Yes' in block 608). There may be a lag between the receipt of the memory allocation request (in block 607) and the receipt of the subsequent write requests from the shader core but this delay in receiving the write requests does not affect the method, as the allocation has already been performed (in block 609, with the delay in receiving a write request resulting in a delay between blocks 609 and 610). The size of the region allocated in the vertex buffer 306 (in block 609) is the same as the size of the region in the off-chip storage allocated to the geometry task by allocation of a GD spill ID (in block 604).

The VB resource manager 712 may acknowledge the memory allocation requests that are received from the shader core 304 (in block 607), e.g. to acknowledge that an allocation has been made, but the acknowledgement does not contain information about where the write will be directed. As such, the determination by the VB resource manager 712 is invisible to the shader core 304.

Subsequently, when the geometry task completes (block 618), i.e. the geometry pipeline 302 completes the geometry task and writes out data to the parameter buffer 710, this completion is communicated to the VB resource manager 712 (e.g. arrow 326 in figures 3A, 3B, 4A and 4B). This triggers the VB resource manager 712 to deallocate the GD spill ID and free the corresponding off-chip storage allocation as well as the vertex buffer allocation (from block 609) for those tasks where the geometry data was stored in the vertex buffer 306 (block 620).

In the example shown in figure 6, the decision as to where to write the geometry data is made by first determining whether there is sufficient space available in the vertex buffer (in block 608). If there is sufficient space available ('Yes' in block 608, i.e. the available space in the vertex buffer is larger than the on-chip storage requirement size as determined when the task is created) then a region of the vertex buffer 306 (of a size corresponding to the on-chip storage requirement size) is allocated to the geometry task (block 609) and the VB resource manager 712 directs the write to the vertex buffer (block 610). If, however, there is insufficient space available in the vertex buffer ('No' in block 608), it is determined whether the geometry pipeline 302 is in an out-of-memory (OOM) state (block 612). The geometry pipeline 302 enters an OOM state when the parameter buffer 710 is full and hence the geometry pipeline 302 cannot write any more data to the parameter buffer 710. In this OOM situation, geometry tasks cannot complete and so the vertex buffer will not empty and GD spill IDs and their corresponding allocations in the off-chip memory cannot be freed. If the geometry pipeline 302 is in an OOM state ('Yes' in block 612), the geometry data is written to the off-chip storage and the VB resource manager 712 directs the write to the off-chip storage (block 616). If the geometry pipeline 302 is not in an OOM state ('No' in block 612) then this means that the lack of availability of space in the vertex buffer is only temporary as geometry tasks are still able to complete and there is a delay (e.g. during which time the shader core does not progress with the task) until either on-chip storage can be allocated (block 609, following 'Yes' in block 608, as a consequence of other, preceding, geometry tasks completing in blocks 618 and 620 for those earlier tasks) or the geometry pipeline enters an OOM state ('Yes' in block 612).

Whilst figure 6 shows that the GD spill ID is deallocated (in block 620) once the geometry task is completed (in block 618), in a variation, the GD spill ID may be deallocated earlier in the event that on-chip storage is allocated (in block 609). Once on-chip storage is allocated (in block 609), the allocated off-chip storage (corresponding to the GD spill ID) will not be used (i.e. writes will not be directed to the off-chip storage) and so the GD spill ID may be deallocated. This enables the GD spill ID to be reallocated to another task more quickly than if it was not deallocated until the geometry task completed.

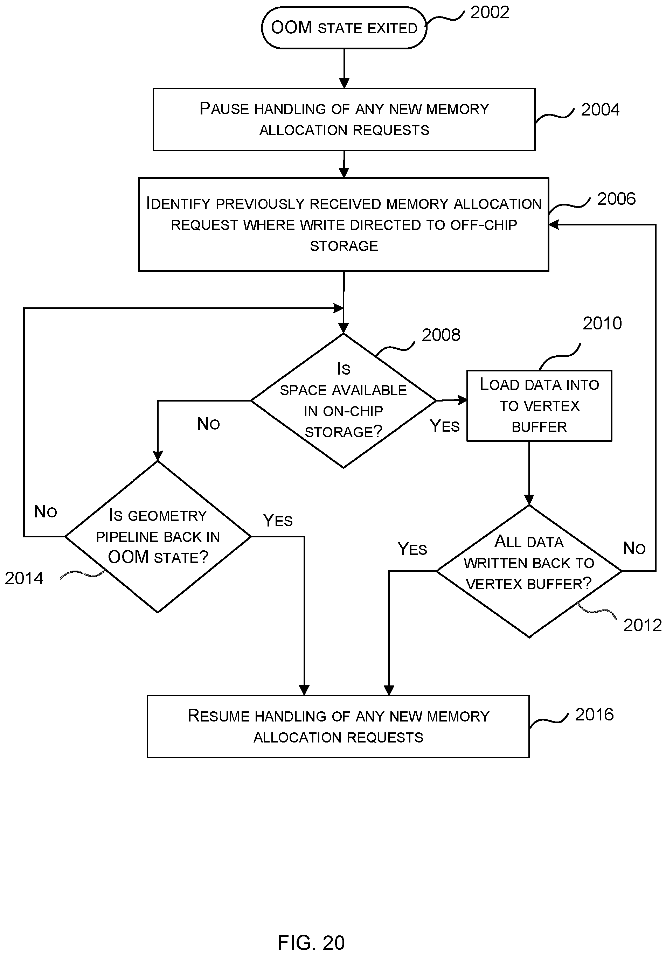

As described above, where the geometry data is written to the off-chip storage (in block 616), the geometry data is subsequently read directly from the off-chip storage by the geometry pipeline 302. In a variation, however, the geometry data may be written back into the vertex buffer 306 and then read by the geometry pipeline 302 from the vertex buffer 306 and not the off-chip storage. This variation is described below with reference to figure 20. Writing the data back to the vertex buffer 306, reduces the overall efficiency (because of the need to write the data back) and adds complexity around handling the write-back process; however, if the data is written back to the vertex buffer 306, the geometry pipeline is less likely to experience long delays when accessing data (caused by off-chip memory reads) because the data will be stored in on-chip storage before a read occurs. Various mechanisms which enable the geometry pipeline 302 to determine where to read the geometry data from in the event that the geometry data is not written back to the vertex buffer 306 are described below. Some of these mechanisms require the geometry pipeline to handle a tag that indicates whether data is stored on-chip (i.e. in the vertex buffer) or off-chip. Other mechanisms are transparent to the geometry pipeline, in the same way as if the data is written back to the vertex buffer, and these mean that the complexity of managing off-chip spilling of geometry data remains within the vertex buffer which can make testing and verification less complex.

In the just-in-time vertex buffer allocation method described above, each geometry task is allocated a single GD spill ID and it is assumed that the region size that corresponds to a GD spill ID is set to be sufficiently large to hold the geometry data generated by any of the geometry tasks. This can lead to inefficient use of the off-chip storage if there is a significant variability in the size of the geometry data for different geometry tasks, e.g. if the region is sized to accommodate rarer larger geometry tasks and so generally where the geometry data is written to the off-chip storage (in block 616), the regions are not close to full (e.g. where the on-chip requirement size for a task is much smaller than the region size corresponding to a GD spill ID). In other examples, however, a smaller region of the off-chip storage may be allocated for each GD spill ID (e.g. as sized based on a typical size of geometry data generated by a geometry task, such as the average or median size) and larger tasks (i.e. tasks that generate more geometry data than can be stored in a single region of off-chip memory) are allocated more than one GD spill ID. In such implementations, the graphics drivers communicate the number of GD spill IDs to allocate for each geometry task to the resource scheduler 702. The GD spill IDs that are allocated may be contiguous as they correspond to addresses in memory and use of contiguous GD spill IDs results in more efficient memory use (e.g. it reduces fragmentation). Where the number of GD spill IDs that are allocated (in block 604) varies, the number of GD spill IDs that are allocated to a particular task may be communicated to the VB resource manager 712 from the resource scheduler 702 (that created the geometry task) so that the VB resource manager 712 knows how much space the geometry task requires to store geometry data. If the GD spill IDs are contiguous then it is not necessary to communicate each allocated GD spill ID and only the number of GD spill IDs that have been allocated. This reduces the amount of data that has to be communicated. Where more than one GD spill ID is allocated to a geometry task, this reduces the maximum number of tasks that can be running in the shader core at the same time.

The execution of geometry tasks by the shader core 304 may be out of order and this may result in memory allocation requests being received by the VB resource manager 712 (in block 607) in a different order to the order in which the geometry tasks were created (in block 602). In order to avoid a later-created geometry task blocking an earlier-created geometry task, the VB resource manager 712 may handle the memory allocation requests that are received (in block 607) in order of task creation.

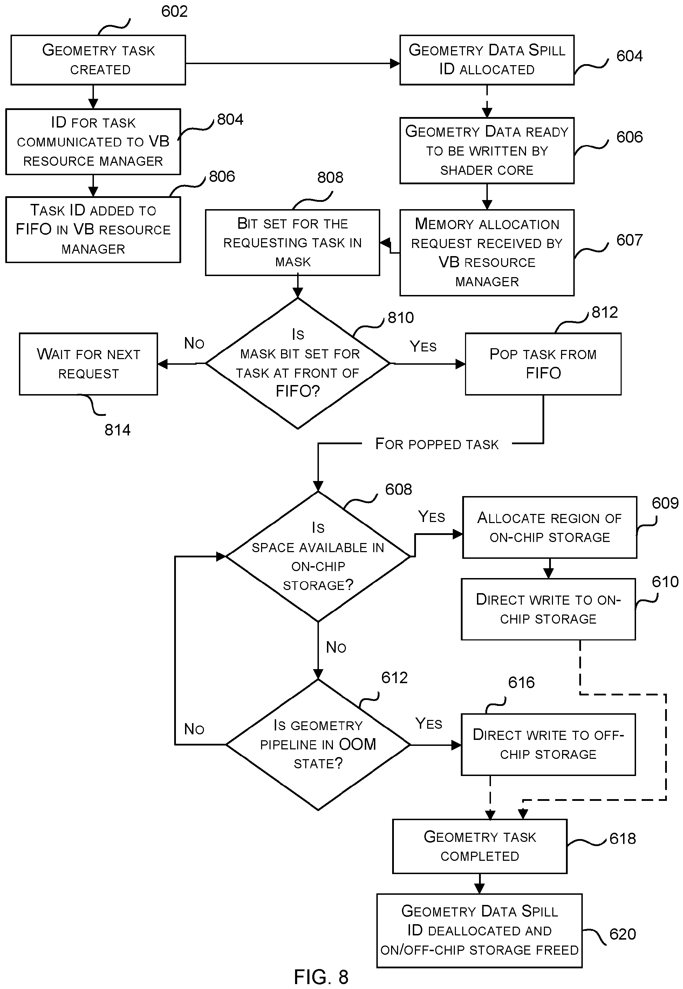

Figure 8 is a flow diagram showing a second example of just-in-time vertex buffer allocation which is a variation on that shown in figure 6 and described above. This method may also be implemented in the GPU 700 shown in figure 7. The method of figure 8 includes additional method blocks that may be used to ensure that the memory allocation requests are handled in creation order by the VB resource manager 712. It will be appreciated that this shows one way in which the order may be maintained, but other methods may alternatively be used.

As shown in figure 8, when a task is created by the resource scheduler 702 (in block 602), an identifier (ID) for the task is communicated to the VB resource manager 712 (block 804) and this ID is added to a FIFO in the vertex buffer 306 (block 806). This FIFO may be in the VB resource manager 712 or elsewhere in the vertex buffer 306 but accessible by the VB resource manager 712 and it will be appreciated that alternative memory structures may be used which are capable of storing the IDs in the order in which they are received and added (in block 806) and tracking which ID is next in order (e.g. a circular buffer).

When a memory allocation request is received by the VB resource manager 712 for a geometry task (in block 607), a bit corresponding to the ID for that task (as communicated in the memory allocation request) is set in a mask (block 808). The combination of the mask and the FIFO are then used to control the order in which memory allocation requests are handled by the VB resource manager 812. If the mask bit for the task at the front of the FIFO is set ('Yes' in block 810), then that task is next in creation-order to be handled. The task is popped from the front of the FIFO (block 812) and the method of figure 6 continues for that popped task as described above (e.g. to decide where the write of the geometry data should be directed in blocks 608-616). If, however, the mask bit for the task at the front of the FIFO is not set ('No' in block 810), then that task is not the next in creation-order to be handled and so the method waits for the arrival of the next memory allocation request (block 814).

The ID for the task that is used for the ordering (i.e. sent to the vertex buffer in block 804 and specified in the mask) may be any ID for the task that is also included in the memory allocation requests (received in block 607). In some examples, the GD spill ID may be used (or the first GD spill ID for a task which is allocated multiple GD spill IDs); however as these GD spill IDs are reused relatively often as they are allocated from a relatively small finite set of GD spill IDs (which as described above, may correspond to the number of available task IDs), another task identifier may be used and this may be an existing ID that is used for other purposes or a newly assigned ID.

Where the method of figure 8 is used and tasks may be allocated more than one GD spill ID, the number of GD spill IDs allocated to a task may be communicated from the resource scheduler 702 to the VB resource manager 712 along with the ID for the task (in block 804) and this avoids the need to include multiple GD spill IDs in the memory allocation request (received in block 607). This means that the shader core 304 does not need knowledge or visibility of the number of GD spill IDs allocated to any particular task. Furthermore, where a task has an ID separate from the GD spill ID, that ID may be included in the memory allocation request and the GD spill ID may be omitted from the memory allocation request. Instead the GD spill ID(s) may be communicated along with the ID for the task (in block 804) and stored together in the FIFO or elsewhere in the VB resource manager 712. It will be appreciated that these two optimizations may be used together or independently of each other.

By using the method of figure 8, the potentially out-of-order allocation requests (as received in block 607) are queued up and presented in order to the VB resource manager 712. This prevents blocking of earlier-created tasks by later-created tasks, as described above.

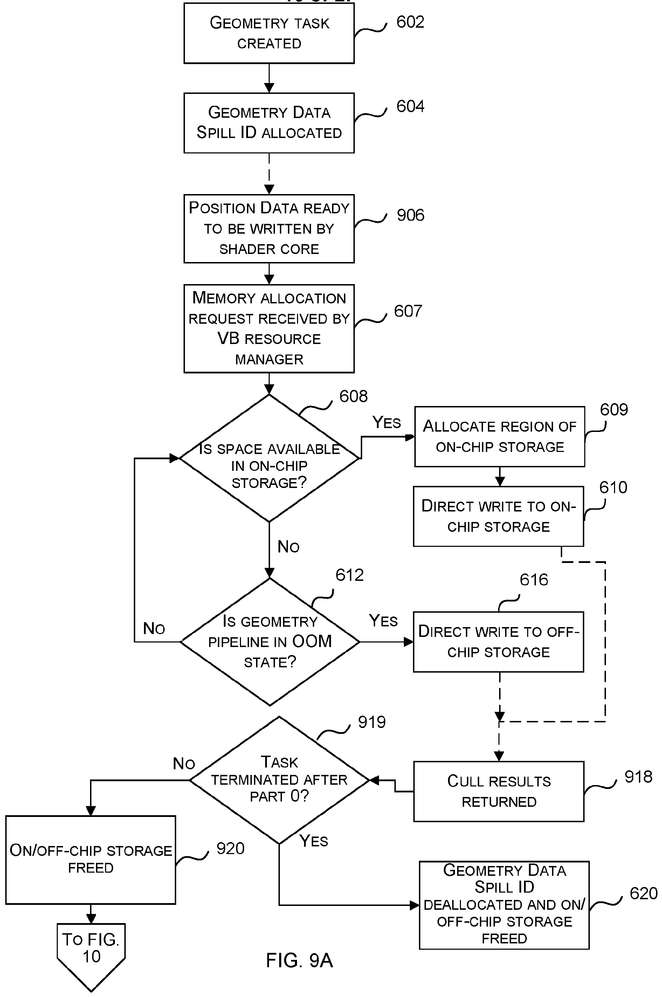

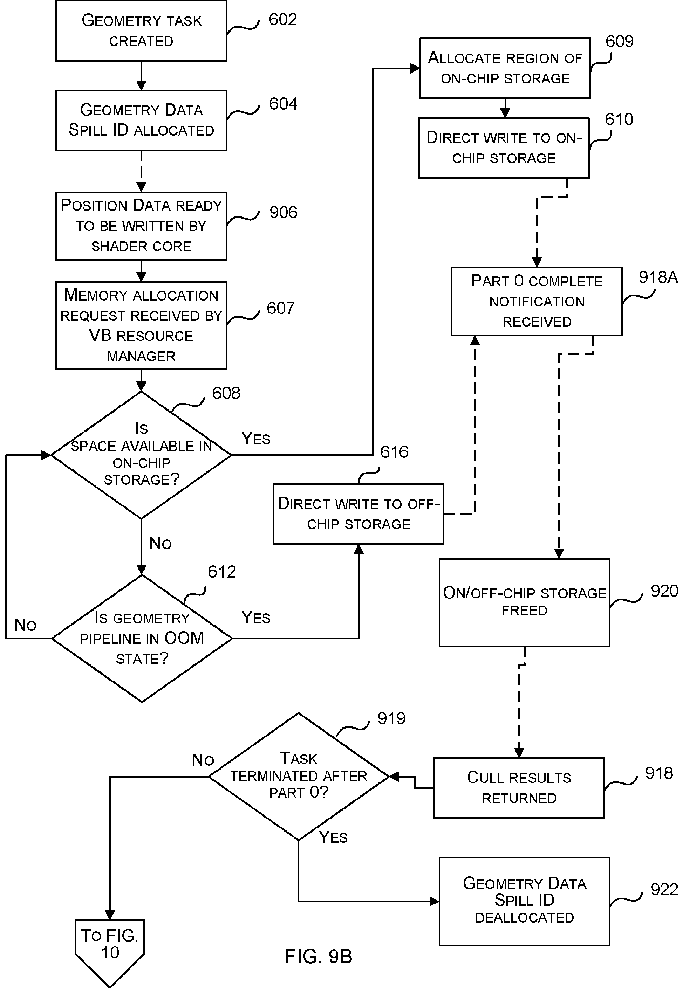

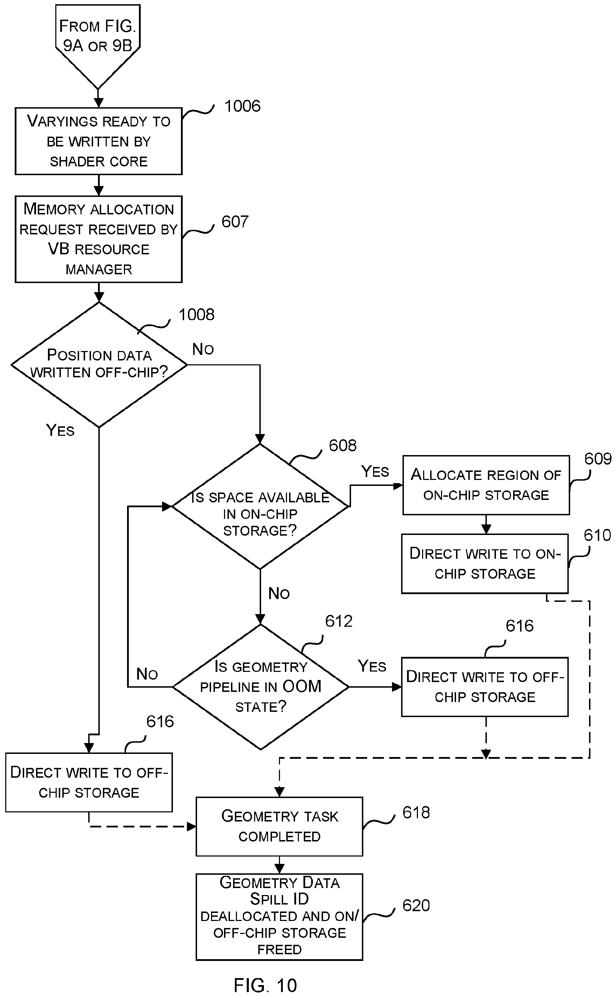

The methods of figures 6-8 may be modified where two vertex buffer allocations are made - a first allocation for the position data (i.e. part 0 data) and a second allocation for the varyings (i.e. part 1 data) as shown in figures 9A, 9B and 10. By using two allocations (rather than one) the vertex buffer allocations are delayed and the lifetime of each allocation is reduced. This enables more tasks to be running (because they can be allocated space in the vertex buffer or spill to off-chip memory) and increases the overall efficiency and utilisation of the GPU. Figures 9A and 9B show two alternative modifications to the method of figure 6 (as described above) when used for allocation of vertex buffer space for the position data and figure 10, which follows on from either figure 9A or figure 9B, shows the modifications to the method of figure 6 (as described above) when used for allocation of vertex buffer space for the varyings.

The differences between the method of figure 9A and that shown in figure 6 is that the memory allocation request is received by the VB resource manager 712 (in block 607) when the position data is ready to be written by the shader core 304 (block 906). Additionally, where the task is not terminated after the first part ('No' in block 919, i.e. at least some of the instances in the task are not culled) the on/off-chip storage is freed (in block 920) once the cull results are returned (block 918) instead of waiting until the entire geometry task is completed, but the GD spill ID is not deallocated as it will also be used for the varying (i.e. part 1 data, as described below with reference to figure 10). Where the task is terminated after part 0 ('Yes' in block 919), then the GD spill ID is deallocated when the on/off-chip storage is freed (block 620).

The differences between the methods of figures 9A and 9B is that, like in figures 3B and 4B, the on/off-chip storage is freed earlier in the method of figure 9B. The freeing of the on/off-chip storage (in block 920) occurs in response to receiving the 'part 0 done' notification (block 918A) which is received separately and in advance of the cull results being returned (in block 918). This also means that where the task is terminated after part 0 ('Yes' in block 919), the GD spill ID is deallocated (block 922). The on/off-chip storage is not freed at this point (as it is in block 620 of figure 9A) because it has already been freed (in block 920).

The differences between the method of figure 10 and that shown in figure 6 are that the GD spill ID does not need to be allocated as it has already been allocated (in figure 9A or 9B) and the memory allocation request is received by the VB resource manager 712 (in block 607) when the varyings are ready to be written by the shader core 304 (block 1006). There is also an additional decision block because if the position data was written off-chip ('Yes' in block 1008), then the varyings are also written off-chip (in block 616).

The method of figure 8 described above relies upon the use of a FIFO within the VB resource manager 712 to maintain ordering of the vertex buffer allocation requests for each task (i.e. a single FIFO is used for this purpose, where this FIFO is distinct from FIFO 312 (in the geometry pipeline 302) shown in figures 3A, 3B, 4A, 4B and 4C which stores position and other primitive data). However, where there are potentially two vertex buffer allocations for a task (assuming that the task is not terminated early following the cull operation), there will be two resource allocations that are associated with the same ID for the task. In order to avoid resource deadlocks, the allocation requests for the position data (i.e. the part 0 allocation requests) may be handled in order of task creation (which is the same as task submission order) and the allocation requests for the varyings (i.e. the part 1 allocation requests) may be handled in task creation order but the individual part 0 and part 1 allocations may be allocated out of order with respect to each other. Additionally, the part 0 allocations cannot consume the entire vertex buffer space as that would block the part 1 allocations and if the part 1 allocations could not progress, the geometry pipeline 302 could be deadlocked. Two FIFOs within the VB resource manager 712 may be used to control the ordering of allocations as described below.

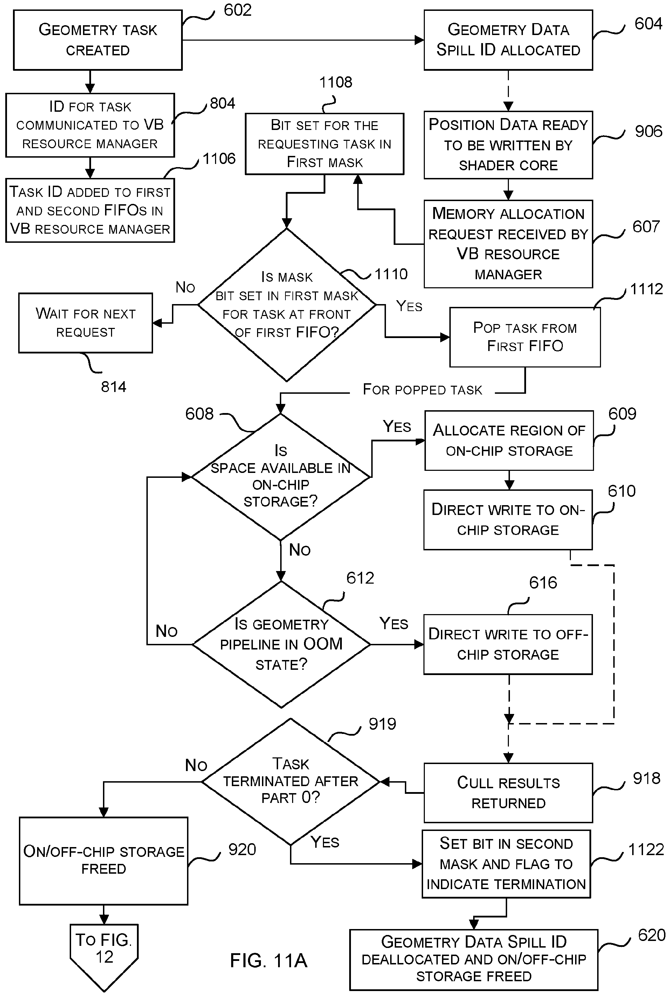

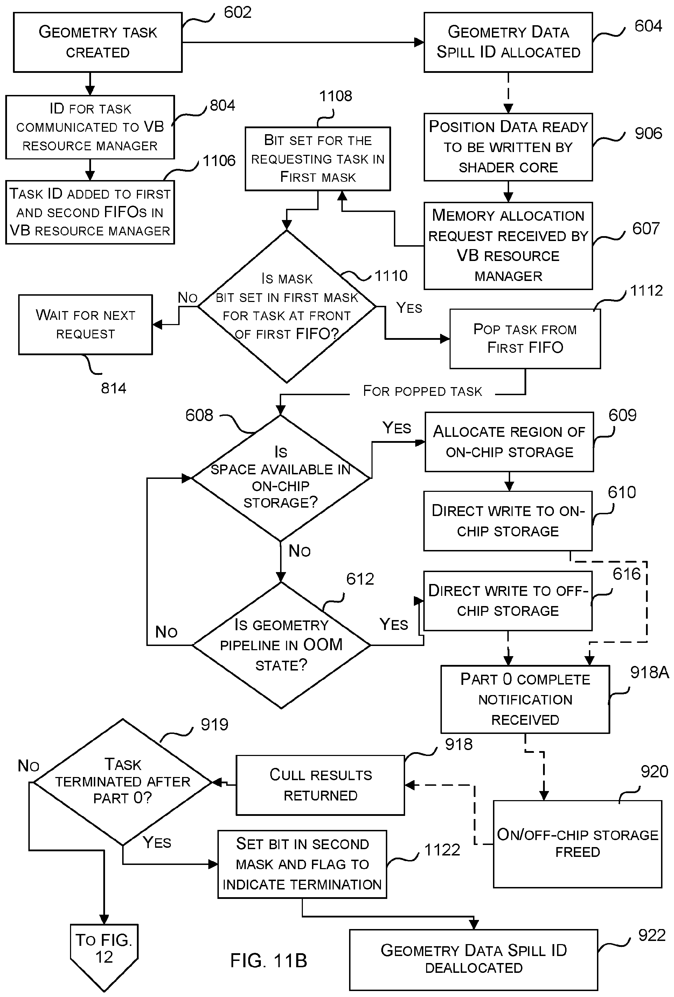

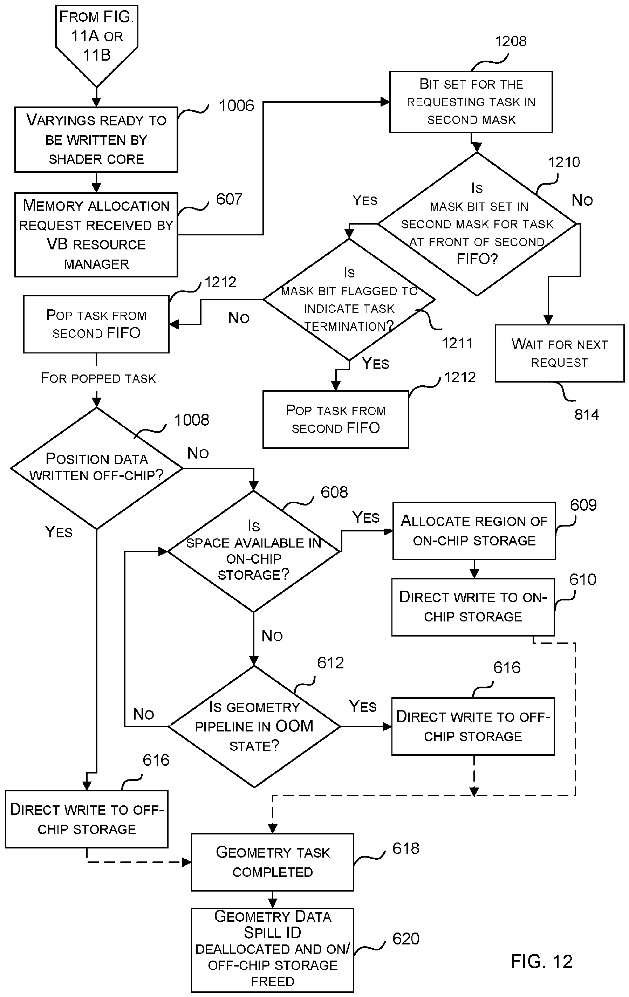

Figures 11A and 11B show the modifications to the method of figure 8 (as described above) when used for allocation of vertex buffer space for the position data and figure 12, which follows on from figure 11A or figure 11B, shows the modifications to the method of figure 8 (as described above) when used for allocation of vertex buffer space for the varyings. Figures 11A, 11B and 12 are also variations on the methods shown in figures 9A, 9B and 10 and described above. Compared to the method shown in figure 8, there are two FIFOs in the VB resource manager 712 and two masks are used (where these masks are distinct from the cull mask described above). The use of two FIFOs enables position data (part 0) and varyings (part 1) allocations to be processed independently (out of order between the two streams) but still in order within each individual stream (i.e. within the stream of allocation requests for space for the position data and within the stream of allocation requests for space for the varyings).

The differences between the method of figure 11A and that shown in figure 8 is that the task ID is added to two FIFOs in the VB resource manager 712, rather than one, with the first FIFO being used for part 0 and the second FIFO being used for part 1 (block 1106). For the position data, the bit is set for the requesting task in the first mask (block 1108) and it is this mask that is checked against the task at the front of the first FIFO (block 1110). If the mask bit is set in the first mask for the task at the front of the first FIFO ('Yes' in block 1110), then the task is popped from the first FIFO (block 1112). Additionally, in a similar manner to figure 9A, the memory allocation request is received by the VB resource manager 712 (in block 607) when the position data is ready to be written by the shader core 304 (block 906). Additionally, where the task is not terminated after the first part ('No' in block 919, i.e. at least some of the instances in the task are not culled) the on/off-chip storage is freed (in block 920) once the cull results are returned (block 918) instead of waiting until the entire geometry task is completed, but the GD spill ID is not deallocated as it will also be used for the varying (i.e. part 1 data, as described below with reference to figure 12). Where the task is terminated after part 0 ('Yes' in block 919), the corresponding bit in the second mask is flagged to indicate that the task has been terminated (block 1122) and the GD spill ID is deallocated when the on/off-chip storage is freed (block 620).

The differences between the methods of figures 11A and 11B is that, like in figure 9B, as well as figures 3B and 4B, the on/off-chip storage is freed earlier in the method of figure 11B. The freeing of the on/off-chip storage (in block 920) occurs in response to receiving the 'part 0 done' notification (block 918A) which is received separately and in advance of the cull results being returned (in block 918). This also means that where the task is terminated after part 0 ('Yes' in block 919), the GD spill ID is deallocated (block 922). The on/off-chip storage is not freed at this point (as it is in block 620 of figure 9A) because it has already been freed (in block 920).

The differences between the method of figure 12 and that shown in figure 8 is that, for the varyings, the bit is set for the requesting task in the second mask (block 1208) and it is this mask that is checked against the task at the front of the second FIFO (block 1210). If the mask bit is set in the second mask for the task at the front of the second FIFO ('Yes' in block 1210), then the task is popped from the second FIFO (block 1212); however, the method only proceeds to process the request allocation if the mask bit for the task is not flagged to indicate that the task has been terminated as a consequence of the cull operation ('No' in block 1211). For those tasks which have been terminated, there will be no allocation request received for the varyings data as the second part of the shader is never executed. Additionally, in a similar manner to figure 10, the GD spill ID does not need to be allocated as it has already been allocated (in figure 11A or 11B) and the memory allocation request is received by the VB resource manager 712 (in block 607) when the varyings are ready to be written by the shader core 304 (block 1006). There is also an additional decision block because if the position data was written off-chip ('Yes' in block 1008), then the varyings are also written off-chip (in block 616).

The vertex buffer 306 may keep track of which entities (e.g. which modules in the geometry pipeline 302) can free the particular vertex buffer allocations. This may be implemented using a mask (that is distinct from the other masks described above) and which may be referred to as the vertex buffer free mask. As described above, in some implementations (e.g. as shown in figure 4A, 9A & 10 and 11A & 12) the cull unit 408 and the VBG 410 may free the allocations (e.g. in blocks 620 and 920) and in other implementations (e.g. as shown in figures 4B, 9B & 10 and 11B & 12) the CLIP unit 404 and the VBG 410 may free the allocations (e.g. in blocks 620 and 920).

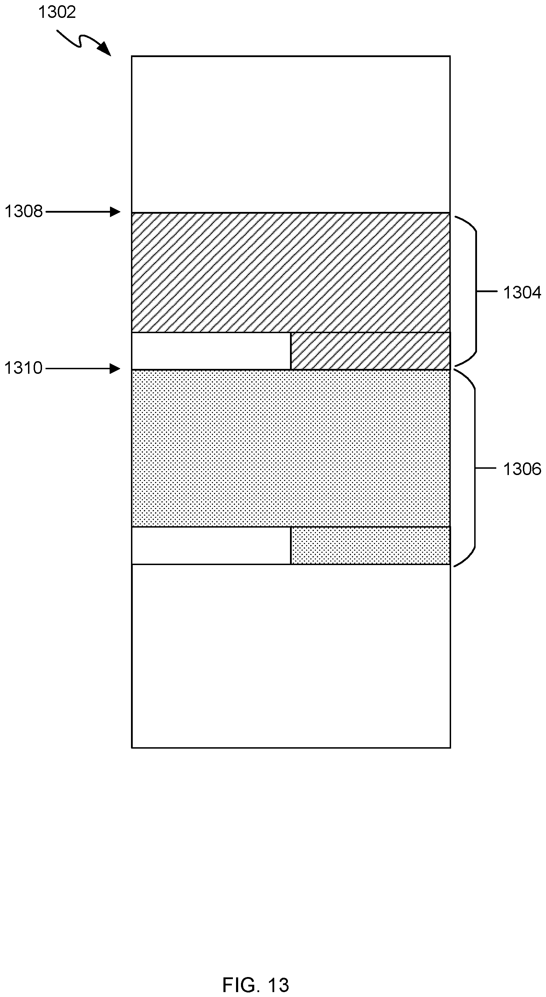

Where just-in-time vertex buffer allocation is used, and irrespective of whether there is a single allocation (as shown in figures 6 and 8) or two allocations (as shown in figures 9A, 9B, 10, 11A, 11B and 12), there is only a single spill region, as identified by the GD spill ID(s) allocated to the task (in block 604) as this reduces the complexity of managing and tracking the spill region; however, if the varyings (part 1) data is written off-chip (in block 616), an additional offset may be applied to the address at which it is written to ensure that the varyings are always 256-bit aligned. This ensures that the geometry back-end 310 (e.g. the VBG 410) can always find the start of the varyings data when reading from the off-chip storage. The offset that is applied is equivalent to the 256-bit aligned size of the position (part 0) data and may be supplied to the geometry back-end 310 by the graphics driver but only used in the event of reading from off-chip storage. Figure 13 shows an example of the spill buffer 1302 storing the position (part 0) data 1304 and the varyings (part 1 data) 1306. As shown in figure 13, the starting addresses 1308, 1310 are aligned on a particular granularity, e.g. 256-bit aligned.

Where two allocations are used, as described above, the position data (part 0) and varyings (part 1) allocations for tasks may be kept separate within the vertex buffer, e.g. with the part 0 allocations starting at one end of the vertex buffer (e.g. the bottom) and the part 1 allocations starting at the other end of the vertex buffer (e.g. at the top). This simplifies buffer allocations since one of the minimum or maximum addresses of the allocations used for part 0 data is predefined and one of the minimum or maximum addresses of the allocations used for part 1 data is predefined. For example, if part 0 allocations start at the bottom, its minimum address will always be zero and consequently, the maximum address for the part 1 allocations will always be the maximum address. The allocations to the position data and varyings may be restricted such that the position (part 0) data cannot fill all the vertex buffer space in order that at least one varyings (part 1) allocation can progress. This prevents a deadlock situation caused by the blocking of all part 1 allocations. Where the methods described herein are used, the geometry back-end 310 (e.g. the VBG 410) may be restricted so that it can only read data from the portion of the vertex buffer used for part 1 allocations, and not from the portion of the vertex buffer used for part 0 allocations.

In order to access the data (position or varyings) that is stored in the vertex buffer, the same index (e.g. the vertex index, vert index) may be used but the address calculated in a different way dependent upon whether the address for the position data or the address for the varyings is required. In this way, this simplifies the operation of the geometry pipeline as separate indices are not needed for each part of the vertex shader. Consequently, each module in the geometry front-end 308 that needs to read the position data (e.g. the PPP 402 and the CLIP module 404) uses the index (vert index) and a part 0 vertex stride to calculate the address in the vertex buffer for the position data and each module in the geometry back-end 310 uses the same index and a part 1 vertex stride to calculate the address in the vertex buffer for the varyings. In an example, the vertex buffer address (vertex_addr) calculation may be as follows:

$$vertex\_addr = vb\_base\_address + (part\_stride + vert\_index)$$

where part_stride is either the part 0 or part 1 vertex stride dependent upon what data is being accessed. These strides may be specified by the graphics driver as a piece of state that is accessed and used by the geometry pipeline 302. The vertex buffer base address (vb_base_address) that is used in the address calculation may be different for each task and may be different for the part 0 and part 1 data or may be the same for both parts for the same task.

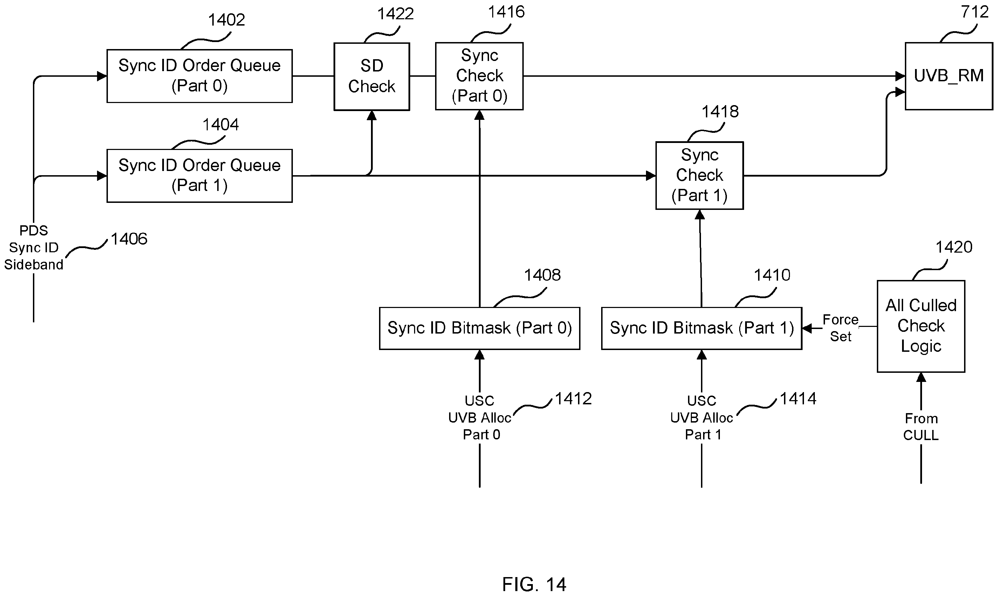

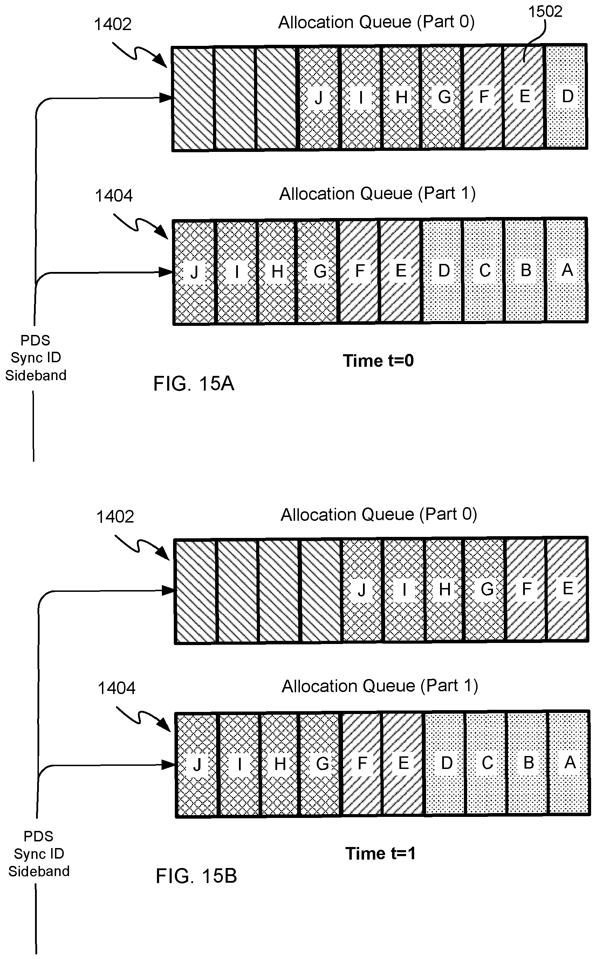

The methods of figures 11A, 11B and 12 assume that the size of the vertex buffer allocations for each task are the same. Where the size of the vertex buffer allocations instead can be varied per task this may be specified by the master unit that fed the data into the GPU and passed to the vertex buffer for each task in the form of a resource limit for the task. The VB resource manager 712 uses the resource limits passed to it for each task (e.g. by the resource scheduler 702) when allocating GD spill IDs (in block 604). Where variable resource limits are used (i.e. different resource limits and hence different sized vertex buffer allocations for different tasks), this introduces additional constraints in processing allocation requests and the position data (part 0) and varyings (part 1) allocations are not processed completely independently. The additional constraints can be described with reference to figures 14, 15A and 15B where the sync ID refers to the ID for the task, as communicated to the VB resource manager 712 in block 804.

Figure 14 is schematic diagram of the process that controls the order of processing the memory allocation requests. This corresponds to the operations in blocks 1106-1110 in figures 11A and 11B and blocks 1208-1210 in figure 12 for situations where there are variable resource limits. Whilst each task may have a specified resource limit, this limit may be the same as or different from the resource limit of the immediately preceding task and the immediately subsequent task in order of task creation. Where there are a series of adjacent tasks with the same resource limit, these form part of a virtual resource limit group. Where a task has a resource limit that differs from both the immediately preceding task and the immediately subsequent task, the task will be in a virtual resource limit group comprising only that task. For the purposes of managing the ordering of handling memory allocation requests, tasks are therefore grouped into virtual resource limit groups according to their resource limit, with all tasks in a virtual resource limit group being consecutive tasks and having the same resource limit. This grouping may be performed by the resource scheduler 702 and the group data (e.g. the virtual resource limit group that a task belongs to or flags which identify the tasks where the virtual resource limit group changes) may be passed by the resource scheduler 702 to the VB resource manager 712 as sideband data (e.g. sideband data to the task ID as communicated in block 804).

Figure 14 shows the first and second FIFOs 1402, 1404 (as referred to in figures 11A, 11B and 12) and these FIFOs 1402, 1404 receive and store the task IDs of tasks when they are created (arrow 1406, as in block 804 described above). Figure 14 also shows the two masks 1408, 1410 (as referred to in figures 11A, 11B and 12) and bits are set in these masks on receipt of memory allocation requests (arrows 1412 and 1414, as in blocks 1108 and 1208 described above) and checked against the tasks at the front of the FIFOs (blocks 1416 and 1418, as in blocks 1110 and 1210 described above). As described above, a bit is also set in the second mask in the event that all the instances in the task are culled and so the task is terminated early (block 1420, as in block 1122 described above), but in this case the mask bit is flagged to indicate the termination of the task which has the effect that no resource allocation for the varyings will ever be received. Where the mask bit is flagged in this way, the task ID is popped from the second FIFO, but no further action is taken as a result.

The additional check which uses the virtual resource limit groups (in block 1422) ensures that all the varyings (part 1) allocation requests (as received in block 607 of figure 12) for a first virtual resource limit group have been processed before any position data (part 0) allocation requests (as received in block 607 of figure 11A or 11B) for a next virtual resource limit group are processed. This may be determined by checking whether the task at the front of the first FIFO 1402 is in the same virtual resource limit group as the task at the front of the second FIFO 1404. If they are in the same virtual resource limit group, the allocation request associated with the position data (part 0) can progress, otherwise, it is delayed while one or more varyings (part 1) allocation requests (as received in block 607 of figure 12) are processed such that the new task at the front of the second FIFO 1404 is in the same virtual resource limit group as the task at the front of the first FIFO 1402. This can be described with reference to the example scenario shown in figures 15A and 15B.

Figure 15A shows the contents of the two FIFOs 1402, 1404 at time t=0, with the front of the FIFOs being on the right hand side of the drawing. Each block 1502 in the FIFO corresponds to a task with the letter in the block indicating the task ID and the shading indicating the virtual resource limit group that the task belongs to. At time t=0, the position data (part 0) allocations are ahead of the varyings (part 1) allocations as task D is at the front of the first FIFO 1402 whereas task A is at the front of the second FIFO 1404. Tasks A-D are part of the same virtual resource limit group (i.e. a first resource limit group shown with a dotted fill pattern), tasks E-F are part of a second virtual resource limit group (shown with a diagonal stripe fill pattern) and tasks G-J are part of a third virtual resource limit group (shown with a cross-hatched fill pattern). As the tasks at the front of both FIFOs are in the same virtual resource limit group, the check (in block 1422) allows the position data (part 0) resource allocation for task D to proceed.

Figure 15B shows the contents of the two FIFOs 1402, 1404 at time t=1, with the front of the FIFOs being on the right hand side of the drawing. The position data (part 0) allocation for task D has been processed so the first task in the first FIFO 1402 is task E which is part of the second virtual resource limit group, whilst task A, which is part of the first virtual resource limit group, is still at the front of the second FIFO 1404. As task E and task A are in different virtual resource limit groups, the check (in block 1422) does not allow the position data (part 0) resource allocation for task E to proceed. This position data (part 0) resource allocation for task E cannot proceed until the varyings (part 1) allocations for tasks A-D have been processed, so that a task in the second virtual resource limit group is at the front of the second FIFO 1404. At this point, the heads of the FIFOs are synchronised again (in terms of virtual resource limit groups).

If the synchronisation technique (involving the extra checks in block 1422) are not used, resource limits from the second virtual resource limit group (tasks shown with a diagonal stripe fill pattern) could be such that they allow the position data (part 0) allocations access to space in the vertex buffer that is required to store the varyings (part 1) allocations for tasks in the immediately previous, first virtual resource limit group (tasks shown with a dotted fill pattern). This would result in position data allocations for tasks from the second virtual resource limit group preventing varyings allocations for tasks from the first virtual resource limit group from being made which in turn would prevent the pipeline from progressing and result in deadlock.

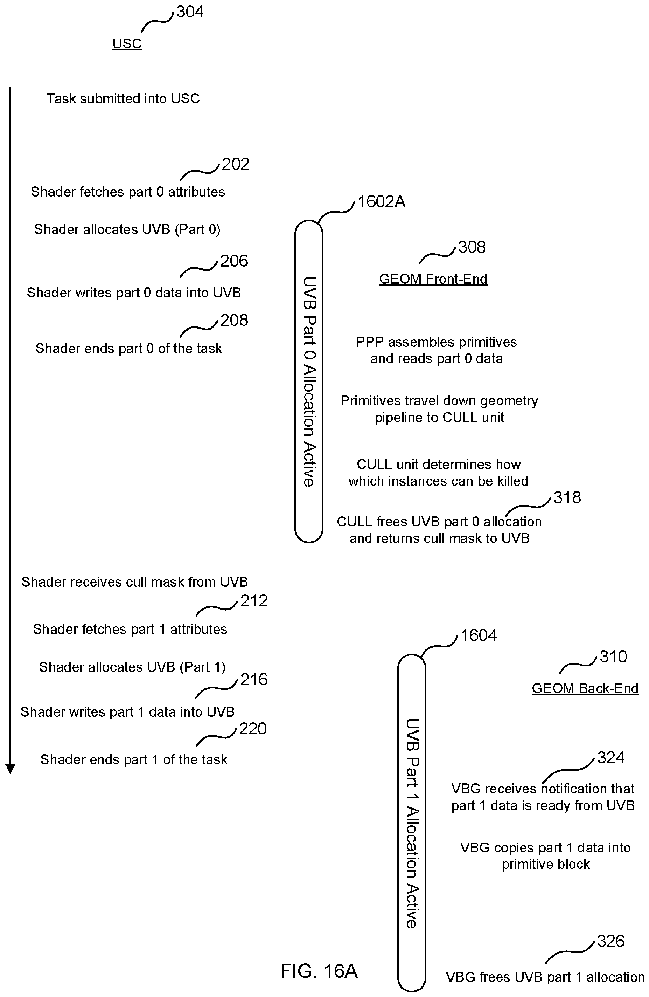

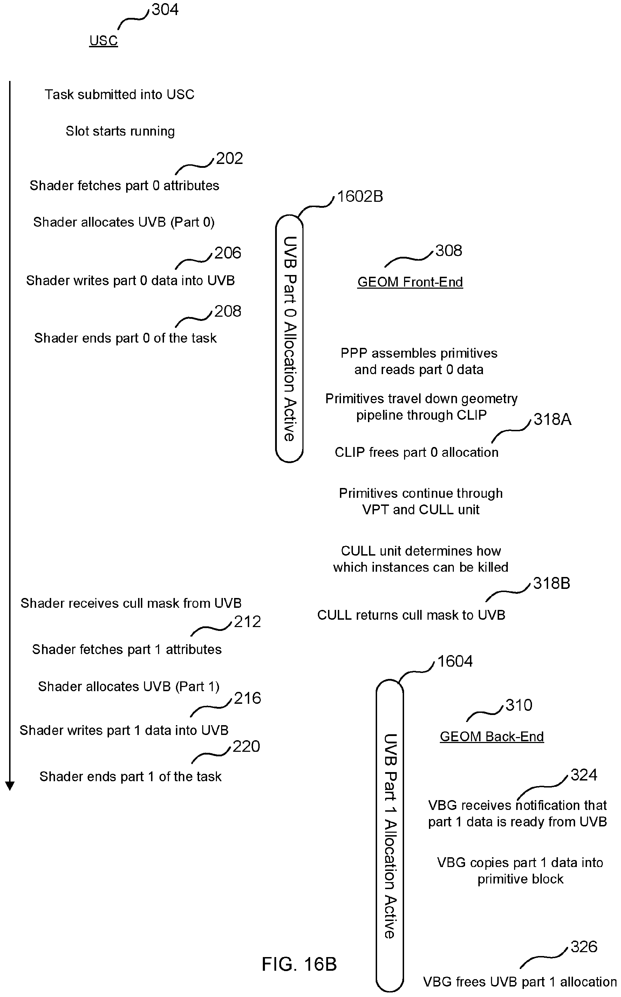

Figures 16A and 16B show two example execution timelines when using the methods described above with time progressing down the page (as indicated by the arrow). The timelines, which correspond to the methods shown in figures 2 and 9A, 9B, 10, 11A, 11B and 12, shows the operations of the shader core 304, geometry front-end 308 and geometry back-end 310 as well as indicating the period 1602A, 1602B when the part 0 allocation is active and the period 1604 when the part 1 allocation is active. As shown in figures 16A and 16B, tasks are submitted into the shader core 304 and the shader core fetches the data for part 0 of the task (block 202), once the position data has been generated, the shader core 304 sends an allocation request (as received by the VB resource manager in block 607) and the data is written to the vertex buffer (block 206) and may be spilled into off-chip storage as described above. At this point part 0 of the task ends (block 208). The PPP 402 assembles the primitives and reads the part 0 data, the primitives travel down the geometry pipeline 302 to the CULL unit 408 which determines which instances can be killed. In the timeline shown in figure 16A, the CULL unit 408 frees the part 0 allocation and returns the cull mask (arrow 318 and block 918). In the timeline shown in figure 16B, the CLIP unit 404 frees the part 0 allocation (arrow 318A and block 918A) and the CULL unit 408 subsequently returns the cull mask (arrow 318B and block 918). The VBG 410 receives notification that part 1 data is ready from the vertex buffer (arrow 324) and copies the part 1 data into the primitive block before freeing the part 1 allocation (arrow 326 and block 620).

The methods described above use per-instance culling (in block 211). This relies upon a fixed and known or otherwise predictable mapping between task instances and vertices and enables a subset of instances within a task to be disabled (i.e. those instances which correspond to vertices that have been culled) and the geometry back-end 310 only processes the remaining instances (i.e. those that were not culled). The methods described herein may instead be used where there is no such mapping or where individual instances within a task cannot be, or are not, disabled following culling. In such examples, the culling may be on a per-task basis. In such examples, the methods operate as described above but where at least some of the instances survive the culling, all instances in the task are processed by the geometry back-end 310. This reduces the overall efficiency, compared to per-instance culling, but still provides efficiency savings since input attributes are not fetched or processed for the second part of the shader where all the instances in a task are culled.

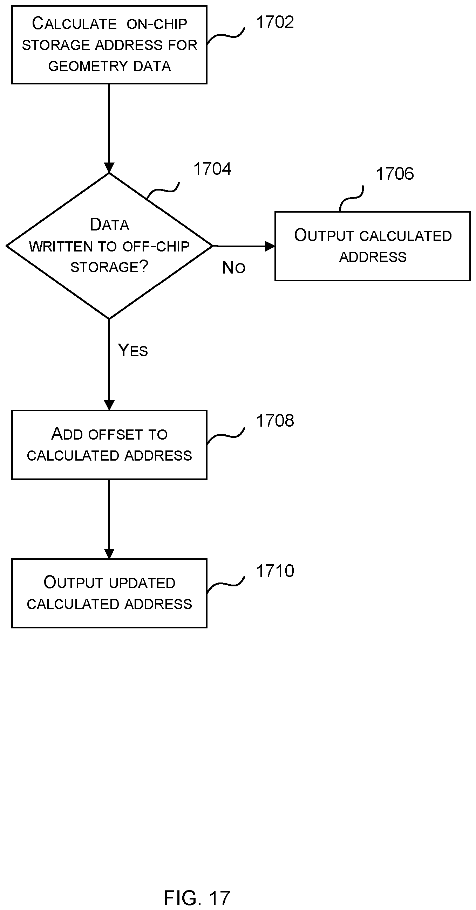

Where just-in-time vertex buffer allocation is used (e.g. in any of figures 6 and 8-12), prior to directing writes (in blocks 610 and 616), the VB resource manager 712 calculates and stores a starting address for the write which refers to either the vertex buffer 608 or to the off-chip storage. An off-chip address is calculated when it is determined that writes will be directed to off-chip storage (following a 'Yes' in block 612 and prior to block 616) and an on-chip address is calculated when allocating the region of on-chip storage (in block 609). In some examples, separate address calculation operations may be performed dependent upon whether the geometry data is to be written to the vertex buffer 306 or to the off-chip storage. In other examples, however, the off-chip storage may mirror the vertex buffer structure and then the same address calculation logic may be used in both circumstances. An additional offset may be added to the address in the event that the geometry data is to be written to the off-chip storage, as shown in figure 17. This offset is in addition to the offset described above (with reference to figure 13) to align the part 1 data.

Figure 17 shows an example method of address calculation for use in the methods of figures 6 and 8-12 described above. An initial memory address is calculated using address calculation logic (block 1702) and this is output (block 1706) and used to write data to the vertex buffer 306 in the event that the geometry data is written to the vertex buffer ('No' in block 1704). However, if the geometry data is instead written to off-chip storage ('Yes' in block 1704), an offset is added to the calculated address (block 1708) before it is output (block 1710) and used to write data to the off-chip storage. The offset that is added (in block 1708) may be read from configuration registers and may be the same for all writes or may be selected based on one or more factors, such as the core to which the geometry task relates, the graphics driver to which the geometry task relates, etc. In some examples, the offset that is added (in block 1708) may comprise a plurality of different partial offsets, each of which is selected and added based on a different factor (e.g. one offset dependent upon the core, another offset dependent upon the graphics driver, etc.) and this reduces the amount of computation required and the number of different offsets that need to be stored in configuration registers. In such an example, the updated address comprises the originally calculated address plus the sum of all the selected partial offsets.

In a variation of that shown in figure 17 and described above, instead of calculating an on-chip address (in block 1702), this may have been determined earlier (e.g. by the resource scheduler 702) and allocated to the geometry task upon creation (e.g. as part of block 604). In such an example, the step of calculating the on-chip address (block 1702 in figure 17) is replaced by a step of looking up an on-chip storage address for the geometry task and then the method proceeds as shown in figure 17 and described above by adding one or more offsets if the geometry data is to be written to off-chip storage.

As described above, the geometry pipeline 302 may read the geometry data directly from wherever it is written to (i.e. from either the vertex buffer 306 or off-chip storage) and data that is written to the off-chip storage is not subsequently copied into the vertex buffer 306 if space becomes available. This means that the geometry pipeline reads need to be directed to where the geometry data for a particular geometry task is stored and there are several different ways in which this could be implemented.

When a geometry task is passed to the geometry pipeline 302 for processing (in an operation which may be referred to as 'kicking the task'), the address of the geometry data is passed to the geometry pipeline 302. The address is determined and stored by the VB resource manager 712 when the on-chip memory is allocated (in block 609) or when it is determined that the write will be directed to the off-chip storage (following a 'Yes' in block 612), as described above. The address is then read back when the task is kicked to the geometry pipeline 302. When directing the write, the VB resource manager 712 inherently knows whether the address is in the vertex buffer 306 or the off-chip storage because it has just determined where the write will be directed; however, this is not the case for the geometry pipeline 302.

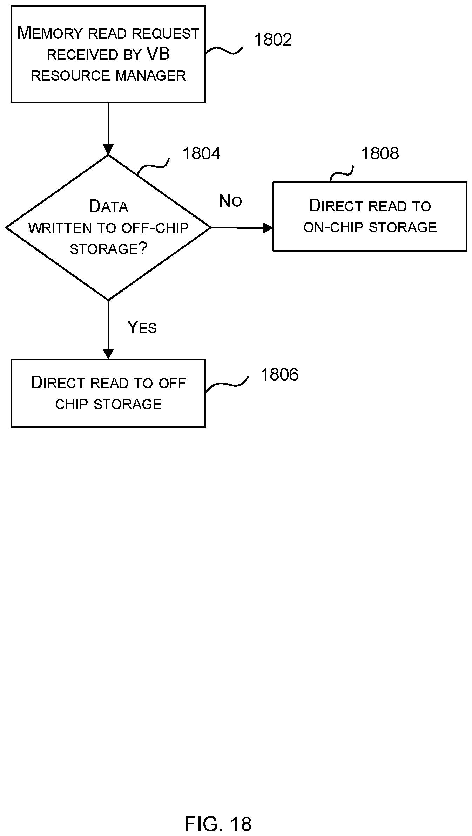

In a first example, shown in figure 18, and in a process which mirrors the writing of the data, the location of the stored geometry data is transparent to the geometry pipeline 302 and instead a look-up is performed by VB resource manager 712 which redirects the reads to the off-chip storage where required. The geometry pipeline 302 sends a read request to the vertex buffer 306 and this is received by the VB resource manager 712 (block 1802). The VB resource manager 712 performs a lookup to determine whether the geometry data was previously written to the vertex buffer or to off-chip storage and this requires that this decision data (i.e. the decisions made in the methods of figures 6 and 8-12) is stored in a data structure. The data structure may, for example, comprise a bit (which may be referred to as a flag or tag) for each task that indicates whether the data was written to off-chip storage. The data structure may be indexed using the GD spill ID or other identifier for the task. If it is determined that the data was written to off-chip storage ('Yes' in block 1804), the read is directed to the off-chip storage (block 1806) and if it is determined that the data was written to the vertex buffer ('No' in block 1804), then the read is directed to the vertex buffer 306 (block 1808). In the event of two allocations per task, the data structure may comprise two bits per task (one for part 0 and one for part 1 of the task).

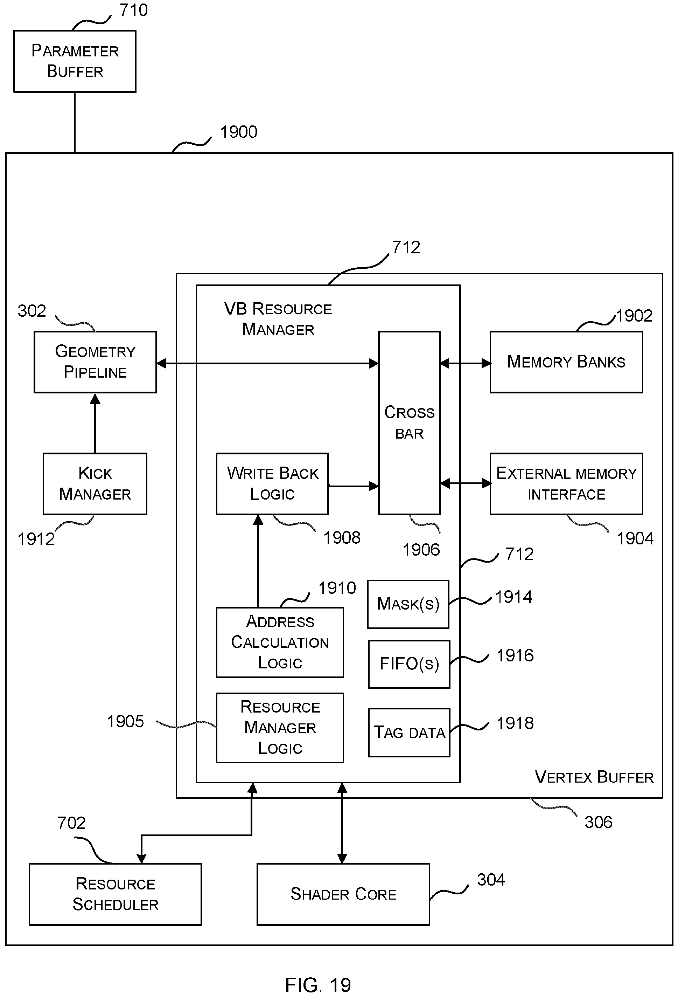

In a second example, the address that is provided to the geometry pipeline 302 for a task is tagged to indicate whether the address relates to either the vertex buffer 306 or to off-chip storage. The geometry pipeline 302 stores and handles this tag and may process it in order to direct the read request appropriately (e.g. such that where the geometry data is written to off-chip storage, the geometry pipeline 302 reads the data from the off-chip storage without communicating with the vertex buffer 306), or alternatively, the geometry pipeline 302 may send the read request, including the tag, to the vertex buffer 306 and a crossbar switch (e.g. with 2 inputs and 2 outputs and configured such that any input can access any output) within the vertex buffer 306 directs the read request either to memory banks within vertex buffer or to the off-chip storage dependent upon the tag. Where such a crossbar is provided, it may also be used to direct the writes, as shown in figure 19 and described below.

Figure 19 shows a second example GPU 1900 in which the methods described above may be implemented. Figure 19 shows additional detail compared to the GPU 700 shown in figure 7. In addition to the elements shown in figure 7 and described above, the vertex buffer 306 comprises a plurality of memory banks 1902 and an external memory interface 1904 which provides the interface to the off-chip storage. The VB resource manager 712 comprises resource manager logic 1905 that determines whether a write is to be directed to on-chip or off-chip storage (as described above). The VB resource manager also comprises a crossbar 1906 that directs reads and writes to either the memory banks 1902 or the external memory interface 1904 based on the tag in the request (as described above).

The VB resource manager 712 further comprises the address calculation logic 1910 that determines the addresses for the writes and write back logic 1908 that directs the writes, along with the corresponding address and tag to the crossbar 1906 and also outputs the write addresses and tags to the kick manager 1912 that initiates the processing of tasks by the geometry pipeline 302.

The VB resource manager 712 additionally comprises one or more masks 1914 (e.g. masks 1408, 1410) and one or more FIFOs 1916 (e.g. FIFOs 1402, 1404) described above as well as a tag data store 1918 that stores data (e.g. the tags for geometry tasks) that indicates whether the geometry data for a geometry task was written to the vertex buffer memory banks 1902 or to the off-chip storage. If the addresses that are output by the write back logic 1908 are not tagged (as in one of the implementations described above), then the crossbar 1906 may perform a lookup in the tag data 1918 in order to determine whether to direct a read or write to the memory banks 1902 or to the external memory interface 1904.

It will be appreciated that a GPU may comprise additional elements in addition to those shown in figure 19 and/or some of the elements shown in figure 19 may be omitted (e.g. where the addresses are tagged, the tag data store 1918 may be omitted).

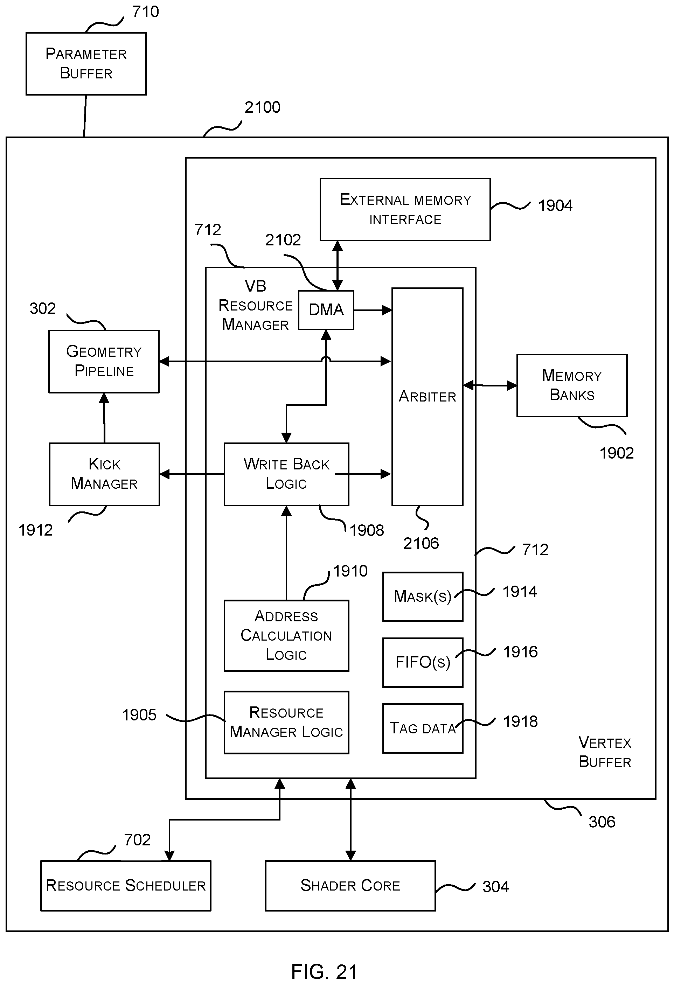

In the GPU 1900 shown in figure 19, any writes that are written to off-chip memory are not loaded back into on-chip memory and instead the data is read directly from the off-chip memory. As described above the data may instead be written back to the vertex buffer and read from there, as described below with reference to figure 20, and a further example GPU 2100 which operates in this way is shown in figure 21.

Figure 20 shows an example method of writing data back from the off-chip storage into the on-chip storage once the geometry pipeline exits from the OOM state. Having exited the OOM state (block 2002), the handling of any new memory allocation requests (e.g. following the receipt of the memory allocation request in block 607 of the methods of figures 6 and 8-12) is paused (block 2004). Handling of new memory allocation requests is only resumed once all data has been written back into on-chip storage from off-chip storage, or the geometry pipeline re-enters the OOM state.

Having paused the handling of new memory allocation requests (in block 2004), a previously received memory allocation request where the writes were directed to off-chip storage is identified (block 2006). It is determined whether there is space to load the data written to off-chip storage into on-chip storage (block 2008) and if there is space ('Yes' in block 2008), the data for the request is loaded into the vertex buffer (block 2010). If this was the last outstanding previously received memory allocation request where the writes were directed to off-chip storage ('Yes' in block 2012), then handling of new memory allocation requests resumes (block 2016), but if not, the method is then repeated by identifying another previously received memory allocation request where the writes were directed to off-chip storage (in block 2006). If at any point it is determined that there is not sufficient space to load the data written to off-chip storage for the identified previously received memory allocation request into on-chip storage ('No' in block 2008), then this is re-attempted until space is available ('Yes' in block 2008) or the geometry pipeline returns to the OOM state ('Yes' in block 2014). If there is insufficient space in on-chip storage ('No' in block 2008) and the geometry pipeline has re-entered the OOM state ('Yes' in block 2014) then handling of new memory allocation requests resumes (block 2016).

By using the method of figure 20, all off-chip allocations are processed to load the data back into on-chip memory before servicing any new allocation requests unless the geometry pipeline re-enters the OOM state. Whilst the method shown in figure 20 describes a single memory allocation per task, the method is still applicable where there are two memory allocations per task.

In order to be able to identify the previously received memory allocation requests where writes were directed to off-chip storage (in block 2006), a record is made at the time memory allocation requests are processed (e.g. in the methods of figures 6 and 8-12) and there are a number of different ways that this may be recorded.

In a first example, two queues are used. The first queue contains new memory allocation requests (e.g. as received in block 607) or identifiers for those requests, where it is yet to be determined whether there is sufficient available on-chip storage (in block 608). The second queue contains identifiers for each allocation request where writes were directed to off-chip storage (e.g. such that the identifier is added to the queue in response to 'Yes' in block 612). After exiting the OOm state (in block 2002), requests in the second queue are processed in order to load the writes into the on-chip storage (in block 2010) and whilst these requests are processed, new memory requests are held in the first queue and are processed once normal handling resumes (in block 2016).

In a second example there is only a single queue of memory allocation requests and when a task is not allocated on-chip storage but instead writes are written to off-chip storage (e.g. following 'Yes' in block 612), the memory request is resubmitted to the back of the queue with a flag to indicate that the memory request needs to be written back from the off-chip storage to on-chip storage. When the OOM state is exited (in block 2002), the queue will only comprise flagged memory requests and newly received requests are added to the end of the queue. These will then be processed in order until all the data has been written back to memory (in which case the queue will only comprise newly received requests and handling of these will resume in block 2016). A single queue requires less area of memory than using two queues; however, use of a single queue requires additional mechanisms for reordering queue entries if the geometry pipeline re-enters the OOM stage ('Yes' in block 2014).

Figure 21 shows a third example GPU 2100 in which the methods described above may be implemented. The GPU 2100 is a variation of that shown in figure 19, and described above, in which the data is written back to the on-chip storage and read from the on-chip storage by the geometry pipeline 302. The GPU 2100 additionally comprises a direct memory access (DMA) module 2102 and there is an arbiter 2106 instead of the crossbar 1906. The DMA 2102 connects to the external memory interface 1904 and the arbiter 2106 and loads the off-chip region of data into the on-chip region (in block 2010).

The number of GD spill IDs in the finite set will provide an upper limit on the amount of geometry data that is written to the off-chip storage in the event of OOM; however, in some implementations, there may be a further optimization that prevents more geometry tasks from being created by the resource scheduler 702 in event of the geometry pipeline 302 entering the OOM state. This enables all the geometry tasks from the shader core 304 to be more quickly drained once an OOM state occurs and leaves the resources of the shader core 304 available to process other tasks that might assist in clearing the OOM state (e.g. running fragment shaders on the shader core where a partial rendering of the scene is performed in order to actively reclaim memory that has already been allocated to the parameter buffer 710). There are many different ways in which the resource scheduler 702 can be stopped from creating more geometry tasks and in an example a parameter that defines the maximum number of pending geometry tasks in the shader core (MAX_TASKS) is temporarily set to zero. Where the number of pending geometry tasks in the shader core (NUM_TASKS) is equal to or exceeds the maximum number (i.e. NUM_TASKS≥MAX_TASKS), the resource scheduler 702 is prevented from creating new geometry tasks. When the geometry pipeline resumes (and hence the OOM state is exited), then the maximum number (MAX_TASKS) is reset and the resource scheduler 702 can create new geometry tasks assuming that there are available GD spill IDs. If there are no available GD spill IDs, the resource scheduler 702 cannot create a new geometry task until a GD spill ID has been freed (in block 620).

In a further optimization, once an OOM state occurs ('Yes' in block 612), a parameter (ALLOC_DENY) may be set in the VB resource manager 712 which effectively shortcuts the determination operations in relation to where to direct writes (e.g. which causes blocks 608 and 612 to be omitted) and instead causes the VB resource manager 712 to direct the writes for tasks corresponding to all subsequently received memory allocation requests to off-chip storage (e.g. by going from block 607 straight to block 616 in figures 6, 9A, 9B and 10 and from block 812 straight to block 616 in figure 8 and from block 1112 straight to block 616 in figures 11A and 11B and from block 1212 straight to block 616 in figure 12). When this parameter is set, all tasks in the FIFO are popped from the FIFO without checking for space for a vertex buffer allocation and writes are directed to the off-chip storage. This parameter may be reset when the geometry pipeline resumes (and hence the OOM state is exited).

In the example GPUs 300, 330, 400, 430, 700, 1900, 2100 shown in figures 3, 4A, 4B, 4C, 7, 19 and 21 (and described above), there is a single shader core 304. In other examples there may be more than one shader core and in such examples, the VB resource manager 712 manages the requests from all the shader cores. Similarly there may be more than one geometry pipeline 302.

Using the just-in-time vertex buffer allocation methods described herein, the ultimate location of the geometry data is not visible to the shader core 304. Depending upon the implementation, the location may be visible to the geometry pipeline 302 or it may also be invisible to the geometry pipeline 302.

In the above examples, the just-in-time vertex buffer allocation method is implemented in hardware and the shader program does not require any changes and does not know where the geometry data is ultimately written to. As described above, the vertex buffer 306 makes the determination and directs the writes accordingly. It may also direct the corresponding reads or this may be handled in another manner (as described above). Alternatively, the method could be implemented at least partially in software.

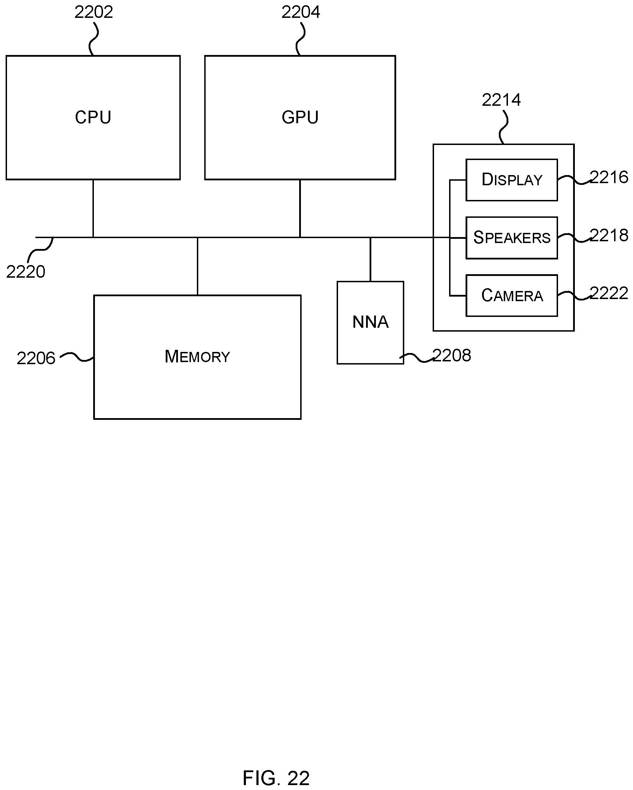

Figure 22 shows a computer system in which the graphics processing systems described herein may be implemented. The computer system comprises a CPU 2202, a GPU 2204, a memory 2206, a neural network accelerator (NNA) 2208 and other devices 2214, such as a display 2216, speakers 2218 and a camera 2222. The GPU 2204 may correspond to the GPU 300, 330, 400, 430, 700, 1900, 2100 shown in figures 3A, 3B, 4A, 4B, 4C, 7, 19 or 21. In other examples, one or more of the depicted components may be omitted from the system. The components of the computer system can communicate with each other via a communications bus 2220.

The GPUs of figures 3A, 3B, 4A, 4B, 4C, 7, 19 or 21 are shown as comprising a number of functional blocks. This is schematic only and is not intended to define a strict division between different logic elements of such entities. Each functional block may be provided in any suitable manner. It is to be understood that intermediate values described herein as being formed by a particular block need not be physically generated by the block at any point and may merely represent logical values which conveniently describe the processing performed by the GPU between its input and output.

The GPUs described herein may be embodied in hardware on an integrated circuit. The GPUs described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a GPU configured to perform any of the methods described herein, or to manufacture a GPU comprising any apparatus described herein. An integrated circuit definition dataset may be, for example, an integrated circuit description.

Therefore, there may be provided a method of manufacturing, at an integrated circuit manufacturing system, a GPU as described herein. Furthermore, there may be provided an integrated circuit definition dataset that, when processed in an integrated circuit manufacturing system, causes the method of manufacturing a GPU to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

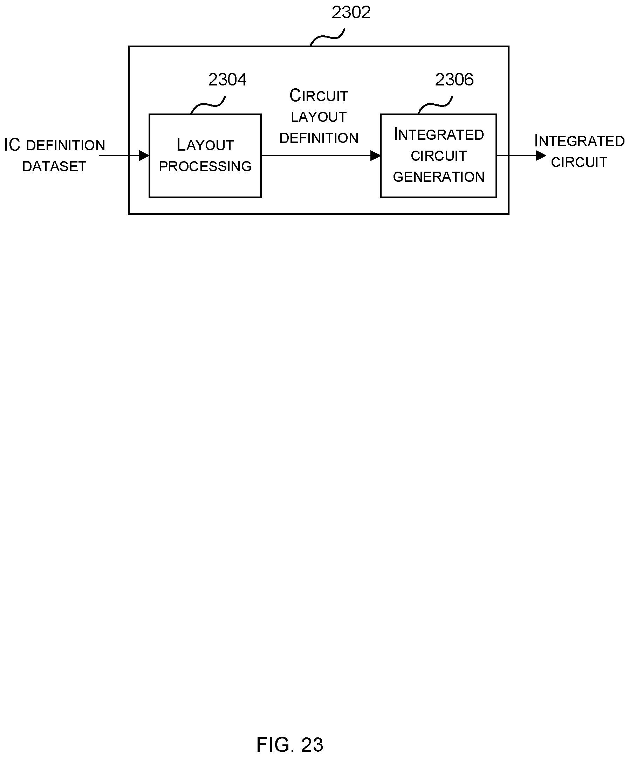

An example of processing an integrated circuit definition dataset at an integrated circuit manufacturing system so as to configure the system to manufacture a GPU will now be described with respect to figure 23.

Figure 23 shows an example of an integrated circuit (IC) manufacturing system 2302 which is configured to manufacture a GPU as described in any of the examples herein. In particular, the IC manufacturing system 2302 comprises a layout processing system 2304 and an integrated circuit generation system 2306. The IC manufacturing system 2302 is configured to receive an IC definition dataset (e.g. defining a GPU as described in any of the examples herein), process the IC definition dataset, and generate an IC according to the IC definition dataset (e.g. which embodies a GPU as described in any of the examples herein). The processing of the IC definition dataset configures the IC manufacturing system 2302 to manufacture an integrated circuit embodying a GPU as described in any of the examples herein.

The layout processing system 2304 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 2304 has determined the circuit layout it may output a circuit layout definition to the IC generation system 2306. A circuit layout definition may be, for example, a circuit layout description.

The IC generation system 2306 generates an IC according to the circuit layout definition, as is known in the art. For example, the IC generation system 2306 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 2306 may be in the form of computer-readable code which the IC generation system 2306 can use to form a suitable mask for use in generating an IC.

The different processes performed by the IC manufacturing system 2302 may be implemented all in one location, e.g. by one party. Alternatively, the IC manufacturing system 2302 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a GPU without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to figure 23 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in figure 23, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method of operating a graphics processing unit, GPU, the GPU comprising a shader core (304), vertex buffer (306) and geometry pipeline (302) and the method comprising, in the shader core (304):

   fetching input attributes used in executing a first part of a geometry task (202), wherein the first part of the task executes a first part of a shader to calculate position data for each instance of the task;
   executing the first part of the task (204);
   outputting the position data for each instance of the task (206);
   descheduling the task until cull results are received for each instance of the task (210); and
   in response to receiving cull results indicating at least one remaining instance in the task that has not been culled:

      fetching input attributes used in executing a second part of a task (212), wherein the second part of the task executes a second part of a shader to calculate varyings for each remaining instance of the task;
      executing the second part of the task (214); and
      outputting the varyings for each remaining instance of the task (216).

2. The method according to claim 1, further comprising, in the vertex buffer (306):

   storing the position data for the task;
   kicking the position data for the task into a front-end (308) of the geometry pipeline (208, 316); and
   in response to receiving cull results for the task from the front-end of the geometry pipeline (318), providing the cull results to the shader core (320).

3. The method according to claim 1 or 2, further comprising, in the shader core:
in response to receiving cull results indicating all instances in the task have been culled, terminating the task (220).

4. The method according to any of the preceding claims, further comprising, in response to receiving cull results indicating at least one remaining instance in the task that has not been culled, in the vertex buffer (306):

   storing the varyings for the task; and
   kicking the varyings for the task into a back-end (310) of the geometry pipeline (218, 324).

5. The method according to claim 4, further comprising:

   allocating a region of off-chip storage to a geometry task on creation of the geometry task (604),
   receiving, at the vertex buffer (306), a memory allocation request for the geometry task from the shader core (607), wherein the memory allocation request is received after generation of the position data; and
   in response to receiving the memory allocation request, determining, by the vertex buffer, whether to allocate a region of the vertex buffer to the geometry task (608, 612);
   wherein in response to allocating the region of the vertex buffer, the position data and varyings are written to the vertex buffer and in response to determining not to allocate the region of the vertex buffer, the position data and varyings are written to the allocated region of off-chip storage.

6. The method according to claim 5, further comprising:
freeing the allocations in response to the task completing or being terminated.

7. The method according to claim 5 or 6, the method further comprising:

   on creation of the geometry task (602), sending an identifier for the geometry task to the vertex buffer (804) and adding the identifier to a FIFO in the vertex buffer (806); and
   in response to receiving the memory allocation request at the vertex buffer and prior to determining, by the vertex buffer, whether to allocate a region of the vertex buffer to the geometry task:

      setting a bit in a mask corresponding to the identifier for the geometry task (808), wherein the memory allocation request comprises the identifier for the geometry task;
      determining whether the identifier for the geometry task is in a first position in the FIFO (810); and
      in response to determining that the identifier for the geometry task is in a first position in the FIFO, popping the task from the FIFO (812) and proceeding to determine whether to allocate a region of the vertex buffer to the geometry task.

8. The method according to claim 4, further comprising:

   allocating a region of off-chip storage to a geometry task on creation of the geometry task (604),
   receiving, at the vertex buffer (306), a first memory allocation request for the geometry task from the shader core (607), wherein the first memory allocation request is received after generation of the position data; and
   in response to receiving the first memory allocation request, determining, by the vertex buffer, whether to allocate a first region of the vertex buffer to the geometry task (608, 612);
   wherein in response to allocating the first region of the vertex buffer, the position data is written to the first region of the vertex buffer and in response to determining not to allocate the first region of the vertex buffer, the position data is written to the allocated region of off-chip storage.

9. The method according to claim 8, further comprising, after receiving cull results indicating at least one remaining instance in the task that has not been culled:

   receiving, at the vertex buffer (306), a second memory allocation request for the geometry task from the shader core (607), wherein the second memory allocation request is received after generation of the varyings; and
   in response to receiving the second memory allocation request, determining, by the vertex buffer, whether to allocate a second region of the vertex buffer to the geometry task (608, 612);
   wherein in response to allocating the second region of the vertex buffer, the varyings are written to the second region of the vertex buffer and in response to determining not to allocate the second region of the vertex buffer, the varyings are written to the allocated region of off-chip storage.

**10.** The method according to claim 9, further comprising:

in response to receiving a notification that the first part of the geometry task is complete (918A), freeing the first allocation (920); and
in response to the task completing, freeing the off-chip allocation and the second allocation (620).

**11.** The method according to claim 9, further comprising:

in response to receiving cull results indicating at least one remaining instance in the task that has not been culled (918), freeing the first allocation (920); and
in response to the task completing, freeing the off-chip allocation and the second allocation (620).

**12.** The method according to any of claims 8, 9 and 11, further comprising:
in response to receiving cull results indicating all instances in the task have been culled, freeing the allocations (620).

**13.** The method according to any of claims 8-12, the method further comprising:

on creation of the geometry task (602), sending an identifier for the geometry task to the vertex buffer (804) and adding the identifier to both a first FIFO and a second FIFO in the vertex buffer (1106);
in response to receiving the first memory allocation request at the vertex buffer and prior to determining, by the vertex buffer, whether to allocate a first region of the vertex buffer to the geometry task:

setting a bit in a first mask corresponding to the identifier for the geometry task (1108), wherein the first memory allocation request comprises the identifier for the geometry task;
determining whether the identifier for the geometry task is in a first position in the first FIFO (1110); and
in response to determining that the identifier for the geometry task is in a first position in the first FIFO, popping the task from the first FIFO (1112) and proceeding to determine whether to allocate a first region of the vertex buffer to the geometry task; and,
in response to receiving the second memory allocation request at the vertex buffer and prior to determining, by the vertex buffer, whether to allocate a second region of the vertex buffer to the geometry task:

setting a bit in a second mask corresponding to the identifier for the geometry task (1208), wherein the second memory allocation request comprises the identifier for the geometry task;
determining whether the identifier for the geometry task is in a first position in the second FIFO (1210); and
in response to determining that the identifier for the geometry task is in a first position in the second FIFO, determining whether the bit in the second mask corresponding to the identifier for the geometry task is flagged to indicate termination (1211);
in response to determining that the bit in the second mask is flagged to indicate termination, popping the task from the second FIFO (1212) without determining whether to allocate a second region of the vertex buffer to the geometry task; and
in response to determining that the bit in the second mask is not flagged to indicate termination, popping the task from the second FIFO (1212) and proceeding to determine whether to allocate a second region of the vertex buffer to the geometry task.

**14.** A graphics processing unit, GPU (300, 330, 400, 430, 700, 1900, 2100), comprising:

a shader core (304);
a vertex buffer (306); and
a geometry pipeline (302),
wherein the shader core (304) is arranged to:

fetch input attributes used in executing a first part of a geometry task (202), wherein the first part of the task executes a first part of a shader to calculate position data for each instance of the task;
execute the first part of the task (204);
output the position data for each instance of the task (206);
deschedule the task until cull results are received for each instance of the task (210); and
in response to receiving cull results indicating at least one remaining instance in the task that has not been culled:

> fetch input attributes used in executing a second part of a task (212), wherein the second part of the task executes a second part of a shader to calculate varyings for each remaining instance of the task;
> execute the second part of the task (214); and
> output the varyings for each remaining instance of the task (216).

15. The GPU according to claim 14, wherein the vertex buffer (306) is arranged to:

> store the position data for the task;
> kick the position data for the task into a front-end (308) of the geometry pipeline (208, 316); and
> in response to receiving cull results for the task from the front-end of the geometry pipeline (318), provide the cull results to the shader core (320).

100

FIG. 1A

| |
|---|
| PART 0      ~ 102 |
| - - - - - - - - - |
| PART 1      ~ 104 |

110

| | |
|---|---|
| Fetch input position attributes | 111 |
| Process input position attributes | 112 |
| Allocate vertex buffer space | 113 |
| Write position | 114 |
| Deschedule until cull result received | 115 |
| Fetch input attributes | 116 |
| Process input attributes | 117 |
| Allocate vertex buffer space | 118 |
| Write varyings | 119 |
| End task | 120 |

102

104

FIG. 1B

FETCH DATA FOR PART 0 OF THE TASK — 202

PROCESS PART 0 INPUT DATA FOR EACH INSTANCE OF THE TASK — 204

EMIT POSITION DATA FOR EACH INSTANCE OF THE TASK — 206

KICK POSITION DATA INTO GEOMETRY PIPELINE — 208

DESCHEDULE TASK UNTIL CULL RESULTS RECEIVED FOR EACH INSTANCE — 210

211 — ALL INSTANCES IN TASK CULLED?

YES → TASK TERMINATES — 220

NO

FETCH DATA FOR PART 1 OF THE TASK FOR EACH REMAINING INSTANCE — 212

PROCESS PART 1 INPUT DATA FOR EACH REMAINING INSTANCE OF THE TASK — 214

EMIT VARYINGS FOR EACH REMAINING INSTANCE — 216

KICK VARYINGS INTO GEOMETRY PIPELINE — 218

FIG. 2

FIG. 3A

FIG. 3B

FIG. 4A

FIG. 4B

PPP → CLIP → VPT → CULL → FIFO → VBG

Part 0
Ready

316

UVB

Part 1 Done

326

Commands

RVK

USC

FIG. 4C

500

| | |
|---|---|
| Fetch input position attributes | 111 |
| Fetch input attributes | 116 |
| Process input position attributes | 112 |
| Process input attributes | 117 |
| Allocate vertex buffer space | 113 |
| Write position | 114 |
| Write varyings | 119 |
| End task | 120 |

FIG. 5

FIG. 6

700

RESOURCE
SCHEDULER

702

SHADER CORE

304

GEOMETRY PIPELINE

302

VERTEX BUFFER

712

VB RESOURCE
MANAGER

306

PARAMETER BUFFER

710

FIG. 7

FIG. 8

TO FIG. 12

GEOMETRY TASK CREATED — 602

GEOMETRY DATA SPILL ID ALLOCATED — 604

POSITION DATA READY TO BE WRITTEN BY SHADER CORE — 906

MEMORY ALLOCATION REQUEST RECEIVED BY VB RESOURCE MANAGER — 607

IS SPACE AVAILABLE IN ON-CHIP STORAGE? — 608

YES → ALLOCATE REGION OF ON-CHIP STORAGE — 609

DIRECT WRITE TO ON-CHIP STORAGE — 610

NO

IS GEOMETRY PIPELINE IN OOM STATE? — 612

NO

YES → DIRECT WRITE TO OFF-CHIP STORAGE — 616

TASK TERMINATED AFTER PART 0? — 919

CULL RESULTS RETURNED — 918

NO → ON/OFF-CHIP STORAGE FREED — 920

YES → GEOMETRY DATA SPILL ID DEALLOCATED AND ON/OFF-CHIP STORAGE FREED — 620

TO FIG. 10

FIG. 9A

GEOMETRY TASK CREATED — 602

GEOMETRY DATA SPILL ID ALLOCATED — 604

POSITION DATA READY TO BE WRITTEN BY SHADER CORE — 906

MEMORY ALLOCATION REQUEST RECEIVED BY VB RESOURCE MANAGER — 607

IS SPACE AVAILABLE IN ON-CHIP STORAGE? — 608

YES

ALLOCATE REGION OF ON-CHIP STORAGE — 609

DIRECT WRITE TO ON-CHIP STORAGE — 610

No

IS GEOMETRY PIPELINE IN OOM STATE? — 612

No

YES

DIRECT WRITE TO OFF-CHIP STORAGE — 616

PART 0 COMPLETE NOTIFICATION RECEIVED — 918A

ON/OFF-CHIP STORAGE FREED — 920

TASK TERMINATED AFTER PART 0? — 919

No

CULL RESULTS RETURNED — 918

YES

GEOMETRY DATA SPILL ID DEALLOCATED — 922

TO FIG. 10

FIG. 9B

FROM FIG. 9A OR 9B

VARYINGS READY TO BE WRITTEN BY SHADER CORE — 1006

MEMORY ALLOCATION REQUEST RECEIVED BY VB RESOURCE MANAGER — 607

1008 — POSITION DATA WRITTEN OFF-CHIP?

NO

YES

608 — IS SPACE AVAILABLE IN ON-CHIP STORAGE?

YES — ALLOCATE REGION OF ON-CHIP STORAGE — 609

DIRECT WRITE TO ON-CHIP STORAGE — 610

NO

612 — IS GEOMETRY PIPELINE IN OOM STATE?

NO

YES — DIRECT WRITE TO OFF-CHIP STORAGE — 616

616 — DIRECT WRITE TO OFF-CHIP STORAGE

GEOMETRY TASK COMPLETED — 618

GEOMETRY DATA SPILL ID DEALLOCATED AND ON/OFF-CHIP STORAGE FREED — 620

FIG. 10

GEOMETRY TASK CREATED — 602

GEOMETRY DATA SPILL ID ALLOCATED — 604

ID FOR TASK COMMUNICATED TO VB RESOURCE MANAGER — 804

BIT SET FOR THE REQUESTING TASK IN FIRST MASK — 1108

POSITION DATA READY TO BE WRITTEN BY SHADER CORE — 906

TASK ID ADDED TO FIRST AND SECOND FIFOS IN VB RESOURCE MANAGER — 1106

MEMORY ALLOCATION REQUEST RECEIVED BY VB RESOURCE MANAGER — 607

WAIT FOR NEXT REQUEST — 814

IS MASK BIT SET IN FIRST MASK FOR TASK AT FRONT OF FIRST FIFO? — 1110 — No / YES

POP TASK FROM FIRST FIFO — 1112

FOR POPPED TASK

IS SPACE AVAILABLE IN ON-CHIP STORAGE? — 608 — YES / No

ALLOCATE REGION OF ON-CHIP STORAGE — 609

DIRECT WRITE TO ON-CHIP STORAGE — 610

IS GEOMETRY PIPELINE IN OOM STATE? — 612 — No / YES

DIRECT WRITE TO OFF-CHIP STORAGE — 616

TASK TERMINATED AFTER PART 0? — 919 — No / YES

CULL RESULTS RETURNED — 918

ON/OFF-CHIP STORAGE FREED — 920

SET BIT IN SECOND MASK AND FLAG TO INDICATE TERMINATION — 1122

TO FIG. 12

GEOMETRY DATA SPILL ID DEALLOCATED AND ON/OFF-CHIP STORAGE FREED — 620

FIG. 11A

GEOMETRY TASK CREATED — 602

GEOMETRY DATA SPILL ID ALLOCATED — 604

ID FOR TASK COMMUNICATED TO VB RESOURCE MANAGER — 804

TASK ID ADDED TO FIRST AND SECOND FIFOS IN VB RESOURCE MANAGER — 1106

BIT SET FOR THE REQUESTING TASK IN FIRST MASK — 1108

POSITION DATA READY TO BE WRITTEN BY SHADER CORE — 906

MEMORY ALLOCATION REQUEST RECEIVED BY VB RESOURCE MANAGER — 607

IS MASK BIT SET IN FIRST MASK FOR TASK AT FRONT OF FIRST FIFO? — 1110

WAIT FOR NEXT REQUEST — 814

No

YES

POP TASK FROM FIRST FIFO — 1112

FOR POPPED TASK

IS SPACE AVAILABLE IN ON-CHIP STORAGE? — 608

YES

ALLOCATE REGION OF ON-CHIP STORAGE — 609

DIRECT WRITE TO ON-CHIP STORAGE — 610

No

IS GEOMETRY PIPELINE IN OOM STATE? — 612

No

YES

DIRECT WRITE TO OFF-CHIP STORAGE — 616

PART 0 COMPLETE NOTIFICATION RECEIVED — 918A

TASK TERMINATED AFTER PART 0? — 919

No

CULL RESULTS RETURNED — 918

ON/OFF-CHIP STORAGE FREED — 920

YES

SET BIT IN SECOND MASK AND FLAG TO INDICATE TERMINATION — 1122

TO FIG. 12

GEOMETRY DATA SPILL ID DEALLOCATED — 922

FIG. 11B

FIG. 12

FIG. 13

FIG. 14

EP 4 597 316 A1

1402

Allocation Queue (Part 0)

1502

| | | | J | I | H | G | F | E | D |

1404

Allocation Queue (Part 1)

| J | I | H | G | F | E | D | C | B | A |

PDS
Sync ID
Sideband

**Time t=0**

FIG. 15A

1402

Allocation Queue (Part 0)

| | | | | J | I | H | G | F | E |

1404

Allocation Queue (Part 1)

| J | I | H | G | F | E | D | C | B | A |

PDS
Sync ID
Sideband

**Time t=1**

FIG. 15B

USC ~304

Task submitted into USC

~202
Shader fetches part 0 attributes

Shader allocates UVB (Part 0)

~206
Shader writes part 0 data into UVB

~208
Shader ends part 0 of the task

**UVB Part 0 Allocation Active** ~1602A

GEOM Front-End ~308

PPP assembles primitives
and reads part 0 data

Primitives travel down geometry
pipeline to CULL unit

CULL unit determines how
which instances can be killed

~318
CULL frees UVB part 0 allocation
and returns cull mask to UVB

Shader receives cull mask from UVB

~212
Shader fetches part 1 attributes

Shader allocates UVB (Part 1)
~216
Shader writes part 1 data into UVB
~220
Shader ends part 1 of the task

**UVB Part 1 Allocation Active** ~1604

GEOM Back-End ~310

~324
VBG receives notification that
part 1 data is ready from UVB

VBG copies part 1 data into
primitive block

~326
VBG frees UVB part 1 allocation

FIG. 16A

304

USC

Task submitted into USC

Slot starts running

202

Shader fetches part 0 attributes

Shader allocates UVB (Part 0)

206

Shader writes part 0 data into UVB

208

Shader ends part 0 of the task

1602B

UVB Part 0 Allocation Active

308

GEOM Front-End

PPP assembles primitives
and reads part 0 data

Primitives travel down geometry
pipeline through CLIP

318A

CLIP frees part 0 allocation

Primitives continue through
VPT and CULL unit

CULL unit determines how
which instances can be killed

318B

Shader receives cull mask from UVB

CULL returns cull mask to UVB

212

Shader fetches part 1 attributes

Shader allocates UVB (Part 1)

216

Shader writes part 1 data into UVB

220

Shader ends part 1 of the task

1604

310

GEOM Back-End

324

UVB Part 1 Allocation Active

VBG receives notification that
part 1 data is ready from UVB

VBG copies part 1 data into
primitive block

326

FIG. 16B

VBG frees UVB part 1 allocation

CALCULATE ON-CHIP
STORAGE ADDRESS FOR
GEOMETRY DATA — 1702

DATA
WRITTEN TO OFF-CHIP
STORAGE? — 1704

No → OUTPUT CALCULATED
ADDRESS — 1706

YES

ADD OFFSET TO
CALCULATED ADDRESS — 1708

OUTPUT UPDATED
CALCULATED ADDRESS — 1710

FIG. 17

MEMORY READ REQUEST
RECEIVED BY VB
RESOURCE MANAGER    1802

DATA
WRITTEN TO OFF-CHIP
STORAGE?    1804

No    1808

DIRECT READ TO
ON-CHIP STORAGE

YES

DIRECT READ TO OFF
CHIP STORAGE    1806

FIG. 18

710

PARAMETER
BUFFER

1900

712

302

GEOMETRY
PIPELINE

VB RESOURCE
MANAGER

1902

MEMORY BANKS

CROSS
BAR

KICK
MANAGER

WRITE BACK
LOGIC

EXTERNAL MEMORY
INTERFACE

1912

1908

1906

712

1904

1910

MASK(S)

1914

ADDRESS
CALCULATION
LOGIC

FIFO(S)

1916

1905

RESOURCE
MANAGER
LOGIC

TAG DATA

1918

VERTEX BUFFER

702

306

RESOURCE
SCHEDULER

SHADER CORE

304

FIG. 19

FIG. 20

FIG. 21

2202

2204

2214

CPU

GPU

DISPLAY ⁓2216

SPEAKERS ⁓2218

2220

CAMERA ⁓2222

2206⁓ MEMORY

NNA

2208

FIG. 22

2302

2304

IC DEFINITION
DATASET

LAYOUT
PROCESSING

CIRCUIT
LAYOUT
DEFINITION

2306

INTEGRATED
CIRCUIT
GENERATION

INTEGRATED
CIRCUIT

FIG. 23

Europäisches
Patentamt

European
Patent Office

Office européen
des brevets

# EUROPEAN SEARCH REPORT

**Application Number**

EP 25 15 4280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 489 767 B1 (EVERITT CASS W [US] ET AL) 8 November 2016 (2016-11-08) * column 1, line 25 - line 67; figures 2, 3, 4, 5 * * column 2, line 30 - line 50 * * column 4, line 20 - column 5, line 20 * * column 6, line 22 - column 7, line 47 * * column 9, line 28 - column 10, line 45 * | 1-15 | INV. G06F9/48 G06T15/00 G06T15/40 |
| A | US 2018/033184 A1 (JIN GUOHUA [US] ET AL) 1 February 2018 (2018-02-01) * paragraph [0023] * * paragraph [0033] - paragraph [0043]; figure 6 * * paragraph [0057] * * paragraph [0063] * | 1-15 | |
| A | KR 102 459 322 B1 (ADVANCED MICRO DEVICES INC [US]) 26 October 2022 (2022-10-26) * paragraphs [0013], [0019], [0020], [0023], [0025], [0027], [0029] - [0040], [0046] - [0047], [0051], [0058] * | 1-15 | **TECHNICAL FIELDS SEARCHED (IPC)** G06F G06T |
| X | US 2020/151847 A1 (SCHLUESSLER TRAVIS [US] ET AL) 14 May 2020 (2020-05-14) * paragraphs [0068], [0159] - [0163], [0168] * | 1-15 | |

The present search report has been drawn up for all claims

| Place of search | Date of completion of the search | Examiner |
|---|---|---|
| The Hague | 25 March 2025 | Balevic, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   EP 25 15 4280

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | | Publication date | Patent family member(s) | | Publication date |
|---|---|---|---|---|---|
| US 9489767 | B1 | 08-11-2016 | NONE | | |
| US 2018033184 | A1 | 01-02-2018 | EP | 3491618 A1 | 05-06-2019 |
| | | | JP | 6918919 B2 | 11-08-2021 |
| | | | JP | 2019526128 A | 12-09-2019 |
| | | | KR | 20190026016 A | 12-03-2019 |
| | | | US | 2018033184 A1 | 01-02-2018 |
| | | | WO | 2018022357 A1 | 01-02-2018 |
| KR 102459322 | B1 | 26-10-2022 | EP | 3491618 A1 | 05-06-2019 |
| | | | JP | 6918919 B2 | 11-08-2021 |
| | | | JP | 2019526128 A | 12-09-2019 |
| | | | KR | 20190026016 A | 12-03-2019 |
| | | | US | 2018033184 A1 | 01-02-2018 |
| | | | WO | 2018022357 A1 | 01-02-2018 |
| US 2020151847 | A1 | 14-05-2020 | DE | 102019128017 A1 | 14-05-2020 |
| | | | US | 2020151847 A1 | 14-05-2020 |

EPO FORM P0459

For more details about this annex : see Official Journal of the European Patent Office, No. 12/82

**REFERENCES CITED IN THE DESCRIPTION**

**Patent documents cited in the description**

- GB 2401401 A